# EUROPEAN PATENT APPLICATION

(11) **EP 0 609 022 A2**
(43) Date of publication of application: **03.08.1994**
(21) Application number: 94300420.0
(22) Date of filing: 20.01.1994
(51) Int. Cl.: H04N 7/13, H04N 5/14, H04N 7/36, H04N 7/50

(54) **Image encoding apparatus**

(30) Priority: 25.01.1993 JP 29729/93; 21.04.1993 JP 94029/93; 09.12.1993 JP 309100/93
(71) Applicant: MATSUSHITA ELECTRIC INDUSTRIAL CO., LTD., Kadoma-shi, Osaka-fu, 571 (JP)
(72) Inventor: Hashimoto, Kinji, Katano-shi, Osaka (JP); Hasebe, Takumi, Yawata-shi, Kyoto (JP); Nishikawa, Yutaka, Hishi-ku, Kobe-shi, Hyogo (JP); Nishino, Masakazu, Kashiwara-shi, Osaka (JP); Uchida, Hirofumi, Neyagawa-shi, Osaka (JP)
(74) Representative: Rackham, Stephen Neil

(57) **Abstract**

An image encoding apparatus (K1) comprises: a blocking unit (102) for dividing a first image signal into a plurality of blocks; a frame memory (103) for storing a second image signal of a preceding frame; a motion vector memory (104) for storing motion vector data of a block abutting on an encoding block; a search data calculator (105) which calculates one probable vector from the motion vector data stored in the motion vector memory (104) and calculates as search data, data for setting as a first area for closely searching for a motion vector, an area not only including a block predicted by the probable vector but smaller than a search area on a referential frame and for setting as a second area for roughly searching for the motion vector, an area including a search area other than the first area; and a motion vector detector (106) for detecting the motion vector from the first and second image signals by using the search data.

## Description

The present invention relates to an image encoding apparatus which is, when images are recorded and transmitted, capable of encoding image signals through motion compensation so as to reduce data quantity of the image signals.

In response to recent progress of digital signal processing technology of images, integration technology of semiconductors, etc., apparatuses for encoding image signals digitally are developed widely. One of these apparatuses is arranged to reduce redundancy in direction of time. A typical example of such apparatus is an MPEG (Moving Picture Image Coding Experts Group) for which standardization operations are being performed actively at present. In the MPEG, DCT (Discrete Cosine Transform) is employed for compression in direction of time and motion compensated prediction in an interframe is employed for compression in direction of space.

Motion compensated prediction in an interframe is a processing in which an input image signal is divided into a plurality of blocks each having a predetermined size of, for example, 16 horizontal pixels and 16 vertical pixels and prediction is performed by shifting a referential frame through one motion vector such that the image signal is encoded by the motion vector and a difference signal between the input signal and a predictive signal. A reproduced image signal of a preceding frame acts as the referential frame.

Meanwhile, in order to detect a motion vector, matching between an encoding block and a group of blocks in a search area of a referential frame is performed. In the search area, a reference block on the referential frame, corresponding in position to the encoding block is preliminarily set as a reference position. When correlation between one of the blocks of the referential frame and the encoding block is highest, position of this block of the referential frame is detected as the motion vector.

Typical methods of detecting a motion vector include full search method, two-step method and three-step method. In the full search method, search of the motion vector is performed at an accuracy of one pixel throughout a full search area. The full search method gives best image quality but has a drawback that scale of a circuit therefor is enlarged. The two-step method and the three-step method were devised so as to eliminate the drawback of the full search method and detect the motion vector in two steps and three steps, respectively.

In the two-step method, the motion vector is detected through search at an accuracy of two pixels at a first step and then, at a second step, the motion vector of the encoding block is determined by searching for the motion vector detected at the first step and its eight peripheries at an accuracy of one pixel.

In the two-step method and the three-step method, since the number of searches is reduced as compared with that of the full search method, scale of circuits therefor can be made smaller than that of the full search method. Effect for reducing scale of the circuit in the three-step method is greater than that of the two-step method. However, image quality of the two-step method and the three-step method is inferior to that of the full search method. Image quality of the three-step method is deteriorated more than that of the two-step method.

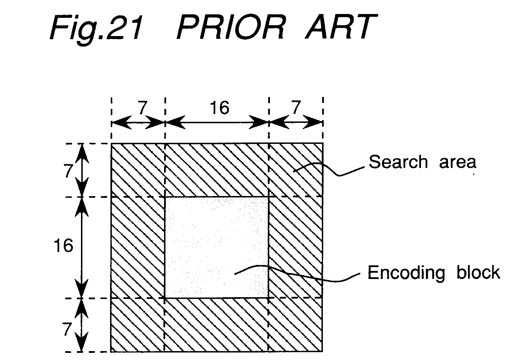

Fig. 21 shows a known search area on an encoding block and a referential frame, in which search of a motion vector ranges from -7 to +7 in the horizontal direction and from -7 to +7 in the vertical direction. In Fig. 21, the encoding block has a size of 16 pixels in the horizontal direction and 16 pixels in the vertical direction. Meanwhile, the search area has a size of 30 pixels in the horizontal direction and 30 pixels in the vertical direction.

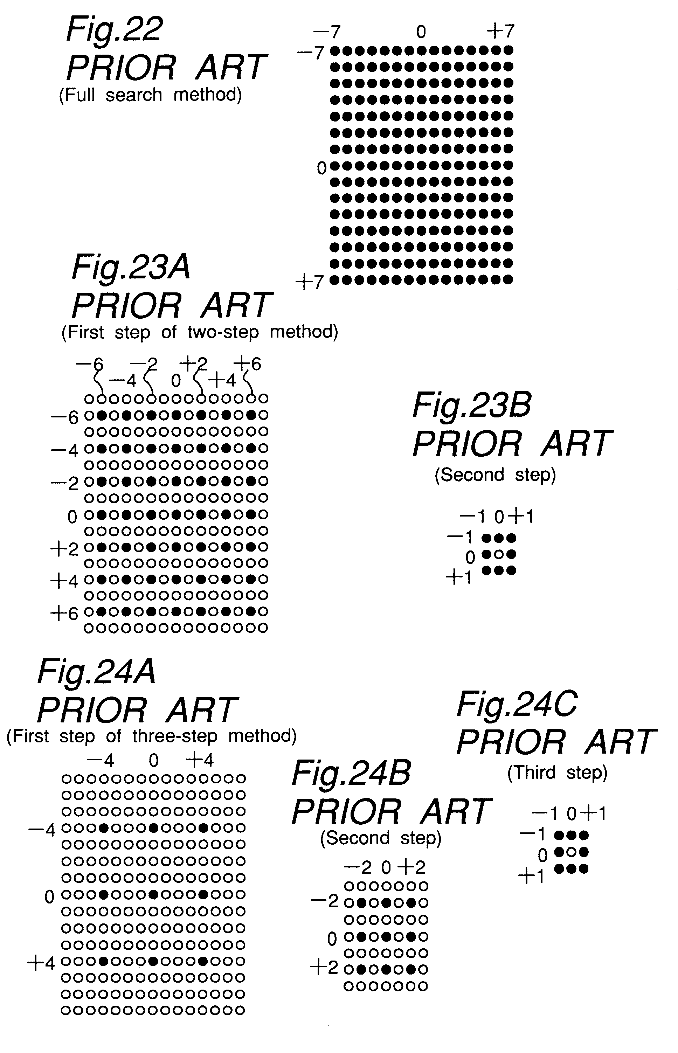

Fig. 22 shows the number of searches of a motion vector in the full search method. When search of the motion vector ranges from -7 to +7 in the horizontal direction and from -7 to +7 in the vertical direction, the number of searches of the motion vector is 225.

Figs. 23A and 23B show numbers of searches of a motion vector at the first and second steps in the two-step method, respectively. As shown in Figs. 23A and 23B, since the numbers of searches of the motion vector at the first and second steps are 49 and 8, respectively, a total number of searches of the motion vector is 57.

Figs. 24A, 24B and 24C show numbers of searches of a motion vector at the first, second and third steps in the three-step method, respectively. As shown in Figs. 24A, 24B and 24C, since the numbers of searches of the motion vector at the first, second and third steps are 9, 8 and 8, respectively, a total number of searches of the motion vector is 25.

In a circuit, search is required to be performed in parallel. Thus, when the full search method is employed in such known image encoding apparatuses as described above, such a serious problem arises that since the number of searches of the motion vector is large, scale of the circuit therefor is enlarged. On the other hand, when the two-step method or the three-step method is employed, image quality is deteriorated disadvantageously.

Accordingly, an essential object of the present invention is to provide an image encoding apparatus in which not only scale of a circuit is lessened as compared with that of a full search method but image quality approximate to that of the full search method can be obtained.

In order to accomplish this object of the present invention, an image encoding apparatus according to the present invention comprises: a blocking unit for dividing a first image signal into a plurality of blocks; a frame memory for storing a second image signal of a preceding frame; a motion vector memory for storing motion vector data of a block abutting on an encoding block; a search data calculator which calculates one probable vector from the motion vector data stored in the motion vector memory and calculates as search data, data for setting as a first area for closely searching for a motion vector, an area not only including a block predicted by the probable vector but smaller than a search area on a referential frame and for setting as a second area for roughly searching for the motion vector, an area including a search area other than the first area; and a motion vector detector for detecting the motion vector from the first and second image signals by using the search data.

In the image encoding apparatus of the above described arrangement, the image signal per frame is initially divided into a plurality of the blocks. Then, by using the search data calculator, one probable vector is calculated by an arithmetic expression such as an average value of the motion vectors from the motion vector data of one or a plurality of the blocks. By the probable vector, the area for close searching and the area for rough searching are set. Finally, the motion vector is detected based on the search data by using the motion vector detector and the motion vector data is stored in the motion vector memory.

In the image encoding apparatus of the present invention, since the motion vector is closely searched for in the first area smaller than the search area on the referential frame and is roughly searched for in the second area including the search area other than the first area, the number of searches of the motion vector can be reduced drastically as compared with the full search method. Furthermore, by using close search and rough search search in combination, image quality can be upgraded substantially to that of the full search method.

Particular embodiments of the present invention will now be described with reference to the accompanying drawings, in which:
Fig. 1 is a block diagram of an image encoding apparatus according to a first embodiment of the present invention;
Figs. 2A to 2G are views indicative of detection of a motion vector in the image encoding apparatus of Fig. 1;
Fig. 3 is a view indicative of kinds of search pattern areas of one frame in the image encoding apparatus of Fig. 1;
Figs. 4A to 4E are views showing search block patterns in the search pattern areas of Fig. 3;
Fig. 5 is a view showing blocks abutting, in time, on an encoding block in the image encoding apparatus of Fig. 1;
Fig. 6 is a flow chart showing sequence of search of the motion vector in the image encoding apparatus of Fig. 1;
Fig. 7 is a block diagram of an image encoding apparatus according to a second embodiment of the present invention;
Fig. 8 is a flow chart showing sequence of operation of the image encoding apparatus of Fig. 7;
Fig. 9 is a flow chart showing sequence of search of a motion vector in the image encoding apparatus of Fig. 7;
Fig. 10 is a view indicative of extraction of a probable vector in the image encoding apparatus of Fig. 7;
Figs. 11A and 11B are views indicative of search of the motion vector in the image encoding apparatus of Fig. 7;
Fig. 12 is a block diagram of an image encoding apparatus according to a third embodiment of the present invention;
Fig. 13 is a flow chart showing sequence of operation of the image encoding apparatus of Fig. 12;
Fig. 14 is a block diagram of an image encoding apparatus according to a fourth embodiment of the present invention;
Fig. 15 is a flow chart showing sequence of operation of the image encoding apparatus of Fig. 14;
Figs. 16A to 16D are views indicative of distribution of predictive error value relative to motion vector value in the image encoding apparatus of Fig. 14;
Fig. 17 is a block diagram of an image encoding apparatus according to a fifth embodiment of the present invention;
Fig. 18 is a flow chart showing sequence of detection and encoding of a motion vector in the image encoding apparatus of Fig. 17;
Figs. 19A to 19E are views indicative of distribution of predictive error value relative to motion vector value at a boundary region when an encoding block is of an identical pattern area in the image encoding apparatus of Fig. 17;
Figs. 20A to 20E are views indicative of distribution of correlative error value relative to motion vector value when an encoding block is located at a boundary of two identical pattern areas in the image encoding apparatus of Fig. 17;
Fig. 21 is a view indicative of prior art detection of a motion vector (already referred to);
Fig. 22 is a view showing a known full search method (already referred to);
Figs. 23A and 23B are views showing a known two-step method (already referred to); and
Figs. 24A to 24C are views showing a known three-step method (already referred to).

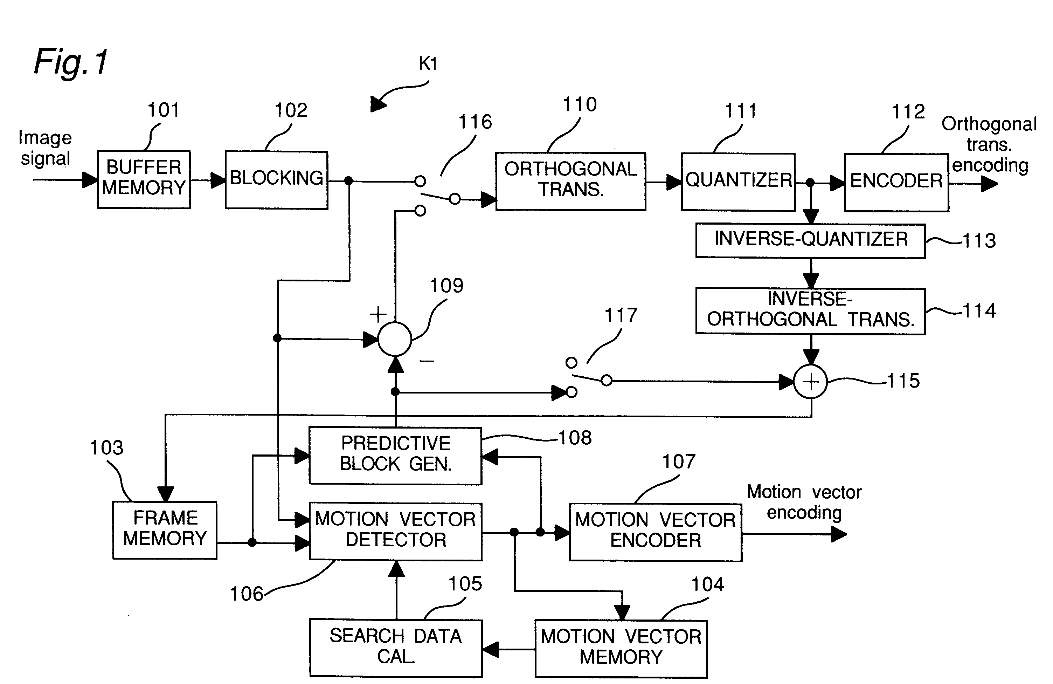

Referring now to the drawings, there is shown in Fig. 1, an image encoding apparatus K1 according to a first embodiment of the present invention. The image encoding apparatus K1 includes a buffer memory 101 for storing image data, a blocking unit 102 for dividing into a plurality of blocks the image data stored in the buffer memory 101, a frame memory 103 for storing image data of a preceding frame, a motion vector memory 104 for storing motion vector data and a search data calculator 105. From the motion vector data on blocks abutting on an encoding block, which is stored in the motion vector memory 104, the search data calculator 105 calculates one probable vector by using a predetermined arithmetic expression. Then, the search data calculator 105 calculates as search data, data for setting an area including a block predicted by the probable vector and smaller than a search area on a referential frame, as an area for closely searching for a motion vector and for setting an area including a search area other than the area for closely searching for the motion vector, as an area for roughly searching for the motion vector.

The image encoding apparatus K1 further includes a motion vector detector 106 for detecting, by using the search data, the motion vector from the encoding block formulated by the blocking unit 102 and the image data stored by the frame memory 103, a motion vector encoder 107 for encoding the motion vector detected by the motion vector detector 106, a predictive block generator 108 for generating, as a predictive block, image data of a block displaced through the motion vector from the image data stored by the frame memory 103, a difference unit 109 for calculating a difference signal between the encoding block and the predictive block, an orthogonal transform unit 110 for performing orthogonal transform of the image data and a quantization unit 111 for quantizing the image data which has been subjected to orthogonal transform.

Furthermore, the image encoding apparatus K1 includes an orthogonal transform encoder 112 for encoding the image data which has been subjected to orthogonal transform and quantization, an inverse-quantization unit 113 for performing an operation opposite to that of the quantization unit 111, an inverse-orthogonal transform unit 114 for decoding the image data which has been subjected to orthogonal transform, an adder 115 for adding the decoded image data and the predictive block to each other and switches 116 and 117 for effecting changeover of an input signal based on whether or not there is the predictive block.

The motion vector memory 104 is provided for temporarily storing the motion vector of each block outputted from the motion vector detector 106. As will be described later, the motion vector stored by the motion vector memory 104 includes not only the motion vector of neighboring blocks of the encoding block of one frame but the motion vector of neighboring blocks of the encoding block of its preceding frame.

The image encoding apparatus K1 of the above described arrangement is operated as follows. Initially, the image data of a first frame is stored in the buffer memory 101. The stored image data of the first frame is supplied to the blocking unit 102 in which a picture plane of the first frame is divided into a plurality of latticed blocks. One block is formed by, for example, 16 vertical pixels and 16 horizontal pixels. Since the image data of the first frame does not include predictive image data, the switch 116 is connected to the orthogonal expansion unit 110 and the image data of each block is inputted to the orthogonal transform unit 110 so as to be subjected to orthogonal transform. A transform coefficient of the orthogonal transform unit 110 is quantized by the quantization unit 111 and is encoded by the orthogonal transform encoder 112.

On the other hand, the quantization data of the quantization unit 111 is also supplied to the inverse-quantization unit 113 so as to be subjected to inverse-quantization and then, is again transformed into the original image data by the inverse-orthogonal transform unit 114. At this time, since the adder 115 is held in OFF state by the switch 117, the predictive block is not given to the adder 115. The image data of one frame outputted from the adder 115 is stored in the frame memory 103 and is used for detecting the motion vector of the next frame.

When the image of the next frame has been outputted from a signal source, the image data is temporarily stored in the buffer memory 101. The stored image data is divided into a plurality of blocks by the blocking unit 102. In each block, the image data is searched by the motion vector detector 106 in a predetermined search range in which a position on a preceding frame corresponding to the image data is set as a reference point. The search range is formed by, for example, 7 horizontal pixels and 7 vertical pixels and a position giving a minimum predictive error (difference in signal level) between the neighboring frames is judged as the motion vector. Data on this motion vector for each block is stored in the motion vector memory 104.

Subsequently, by using the data on the motion vector obtained by the motion vector detector 106, the predictive block generator 108 predicts an image displaced through the motion vector from the reference position of the preceding frame so as to generate the predictive block. The generated predictive block is supplied to the difference unit 109 so as to be converted into difference data between the predictive block and the corresponding block of the preceding frame.

The difference data obtained by the difference unit 109 is supplied, via the switch 116, to the orthogonal transform unit 110 so as to be subjected to orthogonal transform for removing spatial redundancy of the signal. The transform coefficient of the orthogonal transform unit 110 is quantized by the quantization unit 111 and is encoded by the orthogonal transform encoder 112. On the other hand, the motion vector detected by the motion vector detector 106 is encoded by the motion vector encoder 107.

Meanwhile, the quantization data is subjected to a processing opposite to that of the quantization unit 111 by the inverse-quantization unit 113 and is again transformed into the difference data by the inverse-orthogonal transform unit 114. Then, the predictive block of the image supplied to the adder 115 by way of the switch 117 is added to the difference data by the adder 115 so as to be returned to the original image data. The returned original image data is stored in the frame memory 103 and is used for detecting the motion vector of the next block.

Such a case may happen in which encoding quantity in the case where the input signal, per se, of the block to be encoded is transformed and encoded in addition to the image data of the first frame becomes smaller than that in the case where the difference data is transformed. For example, when the picture plane as a whole changed to a new image, it becomes necessary to encode the input data as it is. At this time, output of the blocking unit 102 is inputted to the orthogonal transform unit 110 by using the switch 116 and the predictive data is not supplied to the adder 115.

Meanwhile, in the image encoding apparatus K1, a probable vector is extracted on the basis of the already detected motion vector of the block at the time of detection of the motion vector. The motion vector is detected closely in a small area including a block predicted by the probable vector but is detected roughly in the remaining area. Since the motion vector of the encoding block frequently coincides with the motion vectors of the neighboring blocks, it is possible to employ the already detected motion vectors of the neighboring blocks.

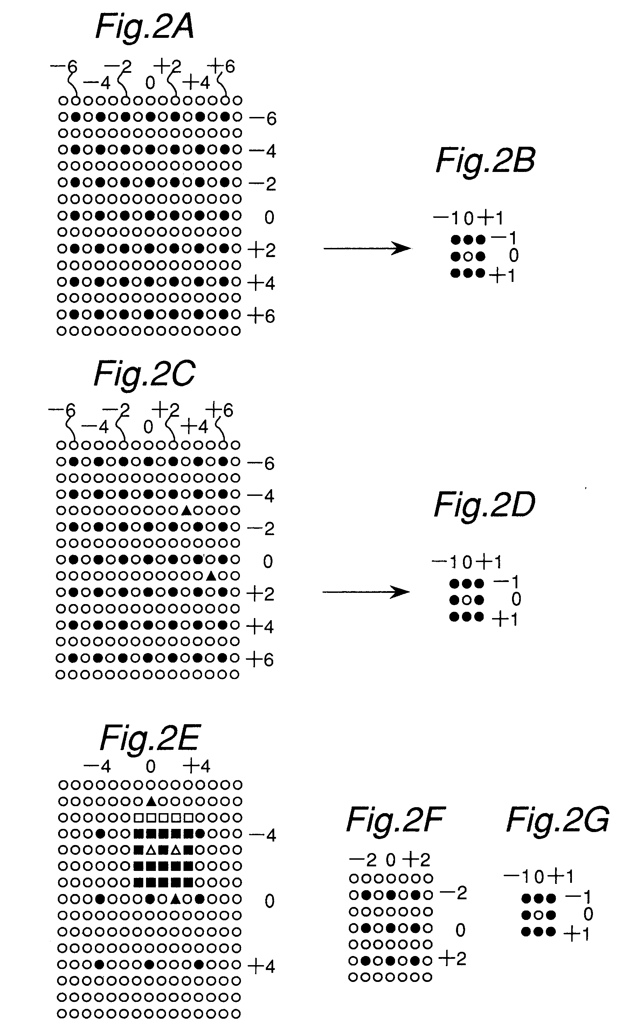

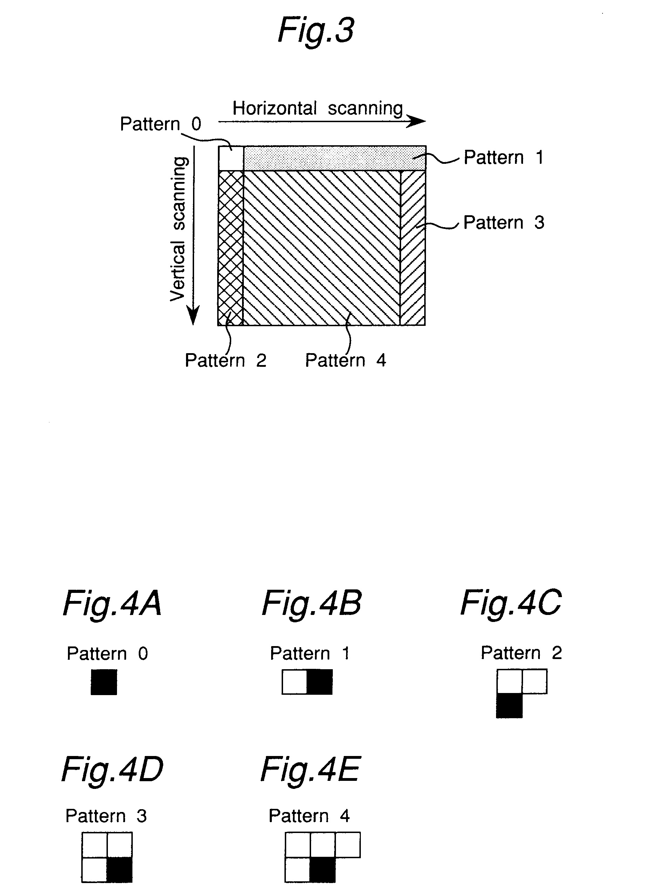

Figs. 2A to 2G show a calculating method of the search data in the search data calculator 105 of the image encoding apparatus K1, while Fig. 3 shows kinds of search patterns of one frame to be searched in the image encoding apparatus K1. As shown in Fig. 3, detection of the motion vector is started from a left corner area of a first row, i.e., a pattern 0 and then, is displaced to its rightward neighboring elongated area, i.e., a pattern 1. At this time, the area of the pattern 0 indicates one block. Thus, when processing of the area of the first row has been completed, processing of an area of second, third, --- and n-th rows is performed. The area of the second to n-th rows is horizontally divided into a plurality of blocks at an identical interval. In the second to n-th rows, a left end portion is set to an area of a pattern 2, a right end portion is set to an area of a pattern 3 and a plurality of blocks interposed between the left end and right end areas are set to an area of a pattern 4.

Figs. 4A to 4E show the search patterns of Fig. 3. In Figs. 4A to 4E, a black square indicates a block in which the motion vector is detected from now on. Meanwhile, a blank square indicates a block in which the motion vector has been detected. Therefore, the block of the blank square can be referred to at the time of detection of the motion vector. As shown in Figs. 4A to 4E, the search patterns capable of being referred to correspond to the patterns 0 to 4, respectively and thus, can be divided into the following five cases.
(a) Pattern 0 (Starting block at the left end of the uppermost row): The number of blocks capable of being referred to is 0.
(b) Pattern 1 (Block at the uppermost row except for the left end): The number of blocks capable of being referred to is 1.
(c) Pattern 2 (Left end block except for the uppermost row): The number of blocks capable of being referred to is 2.
(d) Pattern 3 (Right end block except for the uppermost row): The number of blocks capable of being referred to is 3.
(e) Pattern 4 (Block except for the uppermost row, left end and right end): The number of blocks capable of being referred to is 4.

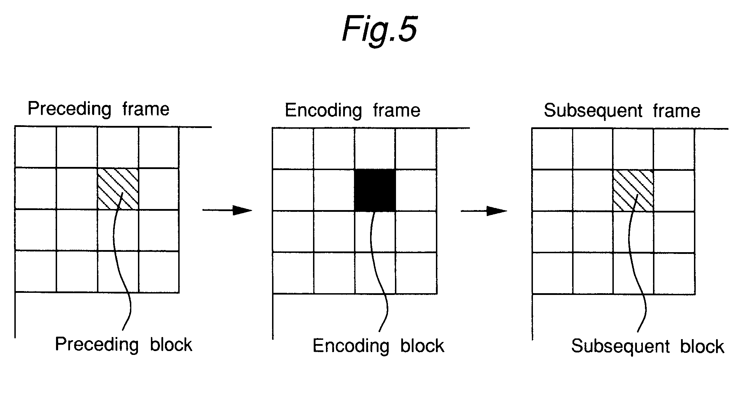

As shown in Figs. 4A to 4E, the neighboring blocks abut on the encoding block spatially. In addition to these neighboring blocks abutting on the encoding block spatially, it is possible to employ as neighboring blocks, blocks abutting, in time, on the encoding block as shown in Fig. 5. When a frame in which encoding is being performed is referred to as an encoding frame, a frame preceding the encoding frame with respect to time is referred to as a preceding frame, while a frame subsequent to the encoding frame with respect to time is referred to as a subsequent frame. Supposing that a block on the preceding frame corresponding in position to the encoding block on the encoding frame is referred to as a preceding block and a block on the subsequent frame corresponding in position to the encoding block on the encoding frame is referred to as a subsequent block, the preceding block and the subsequent block can be used as neighboring blocks of the encoding block.

A period of frames arranged successively with respect to time is, for example, (1/30) sec. Thus, the motion vector between the frames assumes a minute value generally. As shown in Figs. 2A and 2C, the search range of the motion vector extends from -7 pixels to +7 pixels vertically and horizontally with a reference point (0, 0) as its center. Meanwhile, in this embodiment, the number of searches per block is limited to that of a two-step method approximately and thus, an upper limit of the number of searches per block is set to 60. If a full search method is employed, a total of 225 (= 15x15) searches should be performed. Therefore, in this embodiment, the full search method cannot be employed.

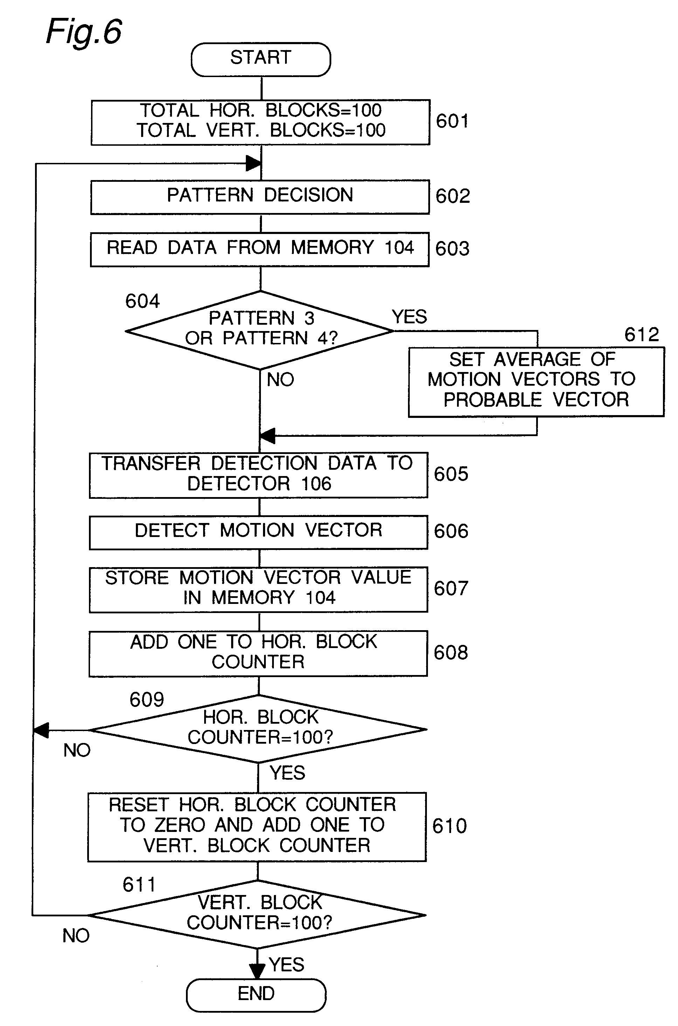

Operation of the search data calculator 105 and the motion vector detector 106 is described with reference to a flow chart of Fig. 6. Initially at step 601, one frame is divided into 100 blocks horizontally and vertically and thus, a total of 10,000 (= 100x100) blocks are obtained. Furthermore, a block number B(X, Y) is allotted to each block and an uppermost left end block in the frame is set to B(0, 0). Then, in order to perform signal processing of each block, the program flow proceeds to step 602 at which pattern decision is made by using the search data calculator 105. Subsequently, at step 603, if the encoding block is other than B(0, 0), data on the motion vector of the neighboring blocks is read from the motion vector memory 104. Thereafter, at step 604, it is judged whether the search block pattern of the block B(0, 0) is the pattern 3 or the pattern 4. Since the present block is the pattern 0, the program flow proceeds to step 605. On the other hand, if the present block is the pattern 1 or the pattern 2, detection data of neighboring blocks of the encoding block, which is stored in the motion vector memory 104, is transferred to the motion vector detector 106 on the basis of the pattern number by the search data calculator 105. Then, at step 605, the motion vector is searched for in a search method corresponding to the pattern.

Initially, in the case of the pattern 0 of Fig. 2A, blocks capable of being referred to do not exist and thus, it is impossible to extract a probable block from the motion vector. In this case, by using the two-step method shown in Figs. 2A and 2B, the motion vector is searched for. As shown in Fig. 2A, at a first step, points indicated by black circles, a total of 49 (= 7x7) points are searched at an interval of 2 pixels and a most probable motion vector is examined by using an evaluation function. Then, at a second step shown in Fig. 2B, when a most probable destination of the image has been determined, vertical and horizontal points surrounding this point as their center are examined at an interval of one pixel such that positioning is performed by eight searches. When searching is performed as described above, a maximum number of searches reaches 57 (= 49+8).

When the motion vector has been obtained at step 606, the program flow proceeds to step 607 at which data on the motion vector is stored in the motion vector memory 104. Then, at step 608, one is added to a counter of the horizontal block. Subsequently, at step 609, it is judged whether or not the counter of the horizontal block reaches 100. Since present count of the counter of the horizontal block is 1, the program flow returns to step 602.

Then, the pattern 1 of Fig. 4B is described. At step 602, the search data calculator 105 examines kinds of the search block patterns and judges a block B(1, 0) as the pattern 1. In this case, by adding points corresponding to position of the motion vector, on blocks capable of being referred to, the motion vector is searched for in the two-step method. In the case of the pattern 1, since the number of the already detected blocks capable of being referred to is 1, data on the motion vector of the block B(0, 0), which is stored in the motion vector memory 104 is read at step 603. Position of the motion vectors obtained from this block is indicated by a black triangle (+3, -3). At this time, since the pattern is neither the pattern 3 nor the pattern 4, the program flow proceeds from step 604 to step 605 at which detection data and the motion vector of the image of the block B(0, 0) are transferred to the motion vector detector 106. Since it is estimated that a probability that the encoding block shown in Fig. 2C also exists at the position (+3, -3) is high, this position (+3, -3) is searched as a neighboring point corresponding to the motion vector, i.e., a reference point.

In this case, 49 (= 7x7) points are searched at an interval of 2 pixels as shown by the black circles in Fig. 2C and a most probable destination of the image is judged. When the most probable destination of the image has been determined, vertical and horizontal points surrounding this point as their center are further examined at an interval of 1 pixel such that positioning is performed by eight searches. By comparing the reference point and the searching points detected by the two-step method, the motion vector is determined. In this case, a maximum number of searches reaches 58 (= 1+49+8).

When search of the block B(1, 0) has been completed, the program flow proceeds to step 608 at which one is added to the counter of the horizontal block. Step 608 is followed by step 609. Such signal processing is repeated up to the block B(99, 0) through steps 602 to 609. When the block B(99, 0) is reached, the program flow proceeds to step 610 at which one is added to a counter of the vertical block. Then, at step 611, it is judged whether or not the counter of the vertical block reaches 100. At this time, since the counter of the vertical block does not reach 100 yet, the program flow returns to step 602.

At step 602, search block pattern of, for example, the block B(0, 1) is judged as the pattern 2. Meanwhile, at this time, since the number of blocks capable of being referred to is 2, the program flow proceeds to step 603 at which positions of the motion vectors obtained from the two blocks capable of being referred to are read from the motion vector memory 104. Thus, as depicted by the black triangles in Fig. 2C, the motion vectors of (+3, -3) and (+5, +1), for example, are obtained. When the program flow proceeds to step 606 through steps 604 and 605, it is estimated that a probability that the positions (+3, -3) and (+5, +1) are the motion vectors also for the encoding block B(0, 1) is high. Thus, by setting these positions to reference points, search of a total of 49 points is performed by the two-step method. By comparing the reference point with the reference point detected by the two-step method, the motion vector is determined. Therefore, a maximum number of searches of the pattern 2 reaches 59 (= 2+49+8).

Then, after one has been added to the counter of the horizontal block at step 609, the program flow returns to step 602 again. In the area of the patterns 3 and 4 such as the blocks B(99, 1) and B(1, 1), a close search method is employed for detecting the motion vectors for points corresponding to positions of the motion vectors of the blocks capable of being referred to, while a three-step method is employed for detecting the motion vectors for the remaining points.

When the search block pattern of the block B(1, 1) is judged as the pattern 4 at step 602, data of the four neighboring blocks is read from the motion vector memory 104 at step 603. Then, at step 604, since the block to be searched at present is of the pattern 4, the program flow branches to step 612. It is supposed at this time that the motion vectors of the four blocks capable of being referred to as shown in Fig. 4E are disposed at the black triangles of (0, -6) and (+2, 0) and blank triangles of (0, -3) and (+2, -3) as shown in Fig. 2E. The search data calculator 105 estimates that a probability that average position of the motion vectors of the four reference blocks acts as the motion vector at this time is high and thus, calculates this average position. Thus, when the program flow proceeds from step 605 to step 606, the motion vector detector 106 closely searches periphery of the average position.

Namely, in Fig. 2E, position of the average motion vector of the four blocks capable of being referred to, i.e., the reference point is depicted by the black square of (+1, -3) and the encoding block is searched at 24 (= 5x5 -1) points in a periphery of this point at a pitch of one pixel. Meanwhile, regarding the remaining points, 9 points (= 3x3) are searched at a pitch of four pixels as shown by the black circles in Fig. 2E and a most probable destination of the image is judged. When judgement of the most probable destination of the image has been formed, vertical and horizontal points surrounding this point as their center are examined at a pitch of two pixels as shown in Fig. 2F such that a more probable destination of the image is judged by eight searches. Then, finally, vertical and horizontal points surrounding this point as their center are examined at a pitch of one pixel such that the most probable destination of the image is judged by eight searches. By comparing the point in the full search area with the search point detected by the three-step method, the motion vector is determined. In this case, a maximum number of searches reaches 53 (= 4+24+9+8+8).

In the same manner as described above, signal processing of the blocks B (1, 1) to B(98, 1) is performed sequentially by this search method. When the block B(99, 1) is reached, the search data calculator 105 judges, at step 602, this block as the pattern 3 shown in Fig. 4D. Also in this case, the program flow proceeds to step 612 through steps 603 and 604. At this time, since the number of blocks capable of being referred to is 3, the number of searches is reduced by one in comparison with the pattern 4. Namely, since the points indicated by the blank triangles and the black triangles shown in Fig. 2E are reduced by one, the search data calculator 105 obtains average position of these three points. Thus, when the program flow proceeds to step 606 via step 605, close search is performed centrally at this point. In this case, a maximum number of searches reaches 52 (= 3+24+9+8+8). Signal processing is continued up to the block B(99, 99) through the above mentioned changeover of the search method.

In the first embodiment as described above, the motion vector of the encoding block is predicted by using detection data of the motion vectors of the neighboring blocks and close search is performed centrally at this point. Therefore, in case prediction is correct, the motion vector can be detected at an accuracy of the full search method. Even if prediction is not correct, the motion vector can be detected at least at a search accuracy of the three-step method. Therefore, in the image encoding apparatus K1 according to the first embodiment of the present invention, it becomes possible to compress and encode image data as a whole at an accuracy approximate to that of the full search method.

Meanwhile, as a probability that a correct motion vector falls within the full search range by prediction from the neighboring blocks rises, detection accuracy of the motion vector is raised and thus, image data can be compressed and encoded highly efficiently. To this end, the number of the neighboring blocks may be increased or variance or frequency distribution of the motion vectors may be employed in place of the average value of the motion vectors such that the search range is controlled more closely. As in search of the points of the black squares at the first step shown in Fig. 2E, search having the minimum pixel pitch is referred to as a first search means. Meanwhile, search of the points of the black circles shown in Fig. 2A is referred to as a second search means. Furthermore, search of the points of the black circles having the maximum pixel pitch as shown in Fig. 2E is referred to as a third search means.

The blocks to be predicted are described as the neighboring blocks on the identical frame. However, blocks which are spaced two blocks or more from each other and in which the motion vector has been detected may also be employed or a block at an identical spatial position on a preceding frame or a subsequent frame may also be employed.

Meanwhile, in this embodiment, detection of the motion vector in the close search range and detection of the motion vector in the rough search range are performed sequentially. However, these detection methods may also be performed in parallel and either one of the detection methods is selected based on evaluation value obtained from the evaluation function of detection of the motion vector. Furthermore, the following method may also be adopted. Namely, the motion vector is detected in the close search range and the motion vector is determined from evaluation value of detection of the motion vector. Then, only in the case where it is judged by using a certain threshold value that the motion vector does not exist in the close search range, detection of the motion vector is performed also in the rough search range. Thus, either one of the detection methods is selected based on evaluation value of the motion vector.

As is clear from the foregoing detailed description of the first embodiment of the present invention, the probable vector of the motion vector of the encoding vector is extracted by using detection data of the motion vectors of the neighboring blocks and close search is performed centrally at the point of the probable vector. Therefore, in case the probable vector has been extracted correctly, encoding can be performed at an accuracy of the full search method. Even if the probable vector has not been extracted correctly, encoding is performed at least at a search accuracy of the three-step method. Consequently, at an accuracy approximate to that of the full search method as a whole, not only the motion vector can be detected but image data can be compressed and encoded.

Hereinbelow, a second embodiment of the present invention is described. In the first embodiment, the number of searches is kept constant at a value corresponding to that of the two-step method and image quality can be improved to that of the full search method by the motion vector detector. However, such a case may happen that increase of the number of steps poses a problem. When the full search method and the three-step method are compared with each other on the supposition that detection of the motion vector ranges from -7 to +7 in the horizontal direction and from -7 to +7 in the vertical direction, the number of searches in the three-step method is 25 and that of the full search method is 225. Hence, by employing the three-step method, the number of searches can be reduced to one-ninth of that of the full search method and thus, scale of the circuit can be lessened greatly as compared with that of the full search method. Meanwhile, in the three-step method, the steps cannot be performed simultaneously. Thus, supposing that processing period of the motion vector detector is constant, processing period of the motion vector detector in the three-step method becomes three times that of the full search method. In order to prevent this increase of processing period of the motion vector detector, pipeline processing is required to be performed for each step, thereby resulting in undesirable enlargement of scale of the circuit. Meanwhile, image quality of the three-step method deteriorates more than that of the full search method.

Therefore, in the second embodiment, an image encoding apparatus is described in which not only the number of searches of the motion vector is reduced but circuit reduction can be performed by setting the number of steps to one.

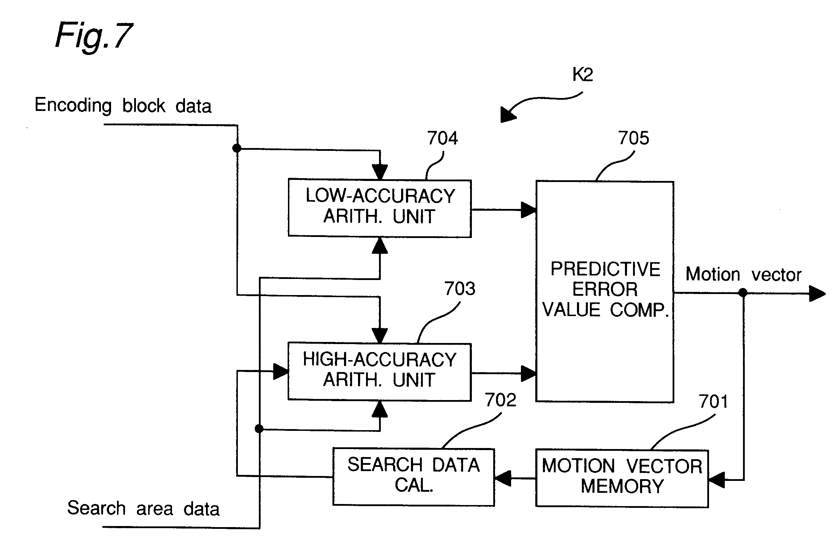

Fig. 7 shows an image encoding apparatus K2 according to a second embodiment of the present invention. In the image encoding apparatus K2, functions of a motion vector memory 701 and a search data calculator 702 are different from those of the motion vector memory 104 and the search data calculator 105 of the image encoding apparatus K1, while the motion vector detector 106 of the image encoding apparatus K1 is replaced by other elements.

Thus, only the above mentioned arrangements different from those of the image encoding apparatus K1 are illustrated in Fig. 7. In Fig. 7, a preset search area for detecting a motion vector, on a referential frame is referred to as a first search area. The motion vector memory 701 stores a motion vector value of an encoding block in which the motion vector has been detected. By using a predetermined arithmetic expression, the search data calculator 702 calculates one probable vector from the motion vector value stored in the motion vector memory 701.

The image encoding apparatus K2 includes a high-accuracy arithmetic unit 703, a low-accuracy arithmetic unit 704 and a predictive error value comparator 705. The high-accuracy arithmetic unit 703 sets a second search area which not only includes a block predicted by the probable vector but is smaller than the search area on the referential frame. Then, the high-accuracy arithmetic unit 703 sets probable vectors in the second search area at an accuracy of one pixel or less and calculates predictive error values for the probable vectors, respectively. The low-accuracy arithmetic unit 704 sets probable vectors in the first search area on the referential frame at an accuracy of two pixels or more and calculates predictive error values for the probable vectors, respectively. By comparing the predictive error values calculated by the high-accuracy arithmetic unit 703 with the predictive error values calculated by the low-frequency arithmetic unit 704, the predictive error value comparator 705 determines a motion vector of an encoding block.

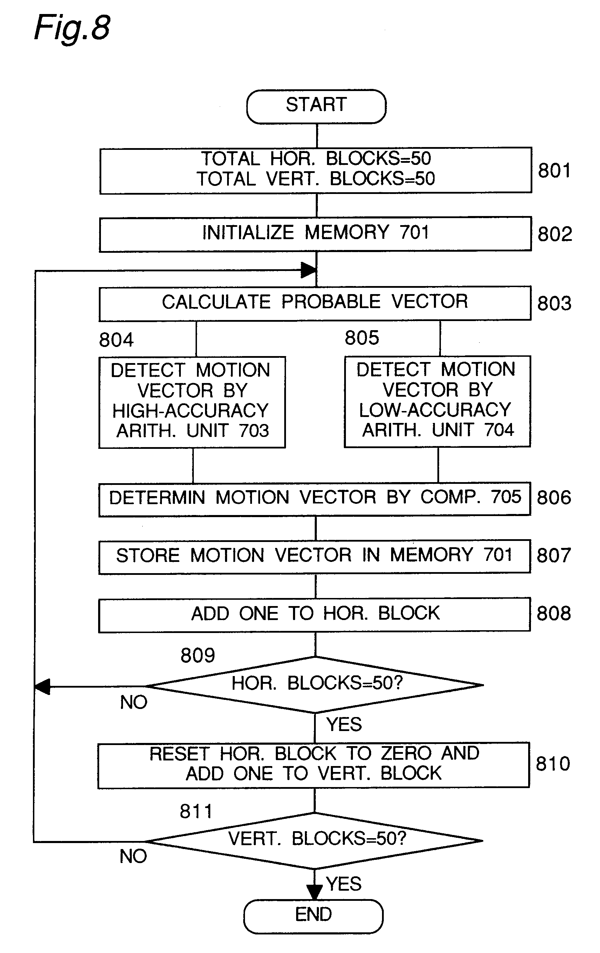

Fig. 8 is a flow chart showing operation of the elements of the image encoding apparatus K2 shown in Fig. 7. Hereinbelow, processing sequence of one frame in the case of a second frame or thereafter is described. At step 801, the numbers of pixels in horizontal and vertical directions of the frame are set to 800 and 800, respectively and each block has 16 horizontal pixels and 16 vertical pixels. Thus, the numbers of horizontal blocks and vertical blocks are 50 and 50, respectively. Meanwhile, initial values of the horizontal and vertical blocks are set to 0 and 0, respectively. Then, at step 802, the motion vector memory 701 is wholly initialized to 0. Subsequently, at step 803, the probable vector of the encoding block is calculated by using the search data calculator 702. At this time, probable vector values in the horizontal and vertical directions are set as HP and HV, respectively.

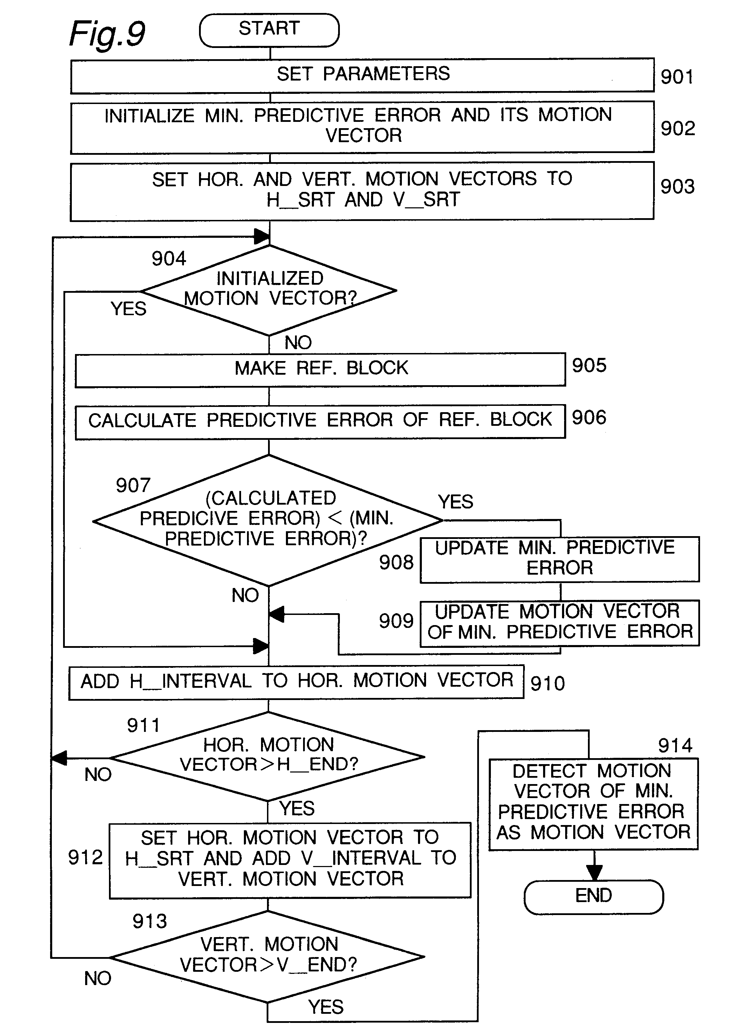

Then, the program flow proceeds to steps 804 and 805. At step 804, by using data of the encoding block and data of the search area, the motion vector is detected by the high-accuracy arithmetic unit 703 in a method indicated by a flow chart of Fig. 9. Supposing that eight pixels abutting on the probable vector as their center are searched, detection of the motion vector in the horizontal direction ranges from HP-1 to HP+1 and detection of the motion vector in the vertical direction ranges from VP-1 to VP+1. Furthermore, search accuracy in the horizontal and vertical directions is set to one pixel. Meanwhile, a minimum predictive error value and an initial set value of its motion vector are not given. A detected motion vector is set as HH and VH in the horizontal and vertical directions, respectively and a minimum predictive error value at this time is set as EH. Step 804 is followed by step 806.

At step 805, by using data of the encoding block and data of the search area, the motion vector is detected by the low-accuracy arithmetic unit 704 in the method indicated by the flow chart of Fig. 9. At this time, detection of the motion vector in the horizontal direction ranges from -4 to +4 and detection of the motion vector in the vertical direction ranges from -4 to +4. Furthermore, search accuracy in the horizontal and horizontal directions is set to four pixels. Meanwhile, a minimum predictive error value and an initial set value of its motion vector are not given. A detected motion vector is set as HL and VL in the horizontal and vertical directions, respectively and a minimum predictive error value at this time is set as EL. Step 805 is followed by step 806.

At step 806, the predictive error value EH of the motion vector calculated by the high-accuracy arithmetic unit 703 is compared with the predictive error value EL of the motion vector calculated by the low-accuracy arithmetic unit 704 by the predictive error value comparator 705. When the predictive error value EL is smaller than the predictive error value EH, HL and VL are determined as the motion vector value of the encoding block. Otherwise, HH and VH are determined as the motion vector value of the encoding block. Step 806 is followed by step 807.

At step 807, the motion vector determined by the predictive error value comparator 705 is stored in the motion vector memory 701. Step 807 is followed by step 808.

At step 808, one is added to the horizontal block of the encoding frame. Step 808 is followed by step 809.

At step 809, it is judged whether or not the number of the horizontal blocks of the encoding frame is equal to 50. In the case of "YES" at step 809, the program flow proceeds to step 810. Otherwise, the program flow returns to step 803.

At step 810, the horizontal block of the encoding frame is reset to zero and one is added to the vertical block of the encoding frame. Step 810 is followed by step 811.

At step 811, it is judged whether or not the number of the vertical blocks of the encoding frame is equal to 50. In the case of "YES" at step 811, processing is terminated. Otherwise, the program flow returns to step 803.

In this embodiment, after the motion vectors have been detected by the high-accuracy arithmetic unit 703 and the low-accuracy arithmetic unit 704, respectively, the motion vector of the encoding block is determined through comparison between their predictive error values by the predictive error value comparator 705. However, this procedure may be changed as follows. Namely, all predictive error values between the encoding block and blocks corresponding to respective search points are extracted by the high-accuracy arithmetic unit 703. Meanwhile, all predictive error values between the encoding block and blocks corresponding to respective search points are extracted by the low-accuracy arithmetic unit 704. Thus, by comparing the predictive error values of the high-accuracy arithmetic unit 703 with the predictive error values of the low-accuracy arithmetic unit 704 by the predictive error value comparator 705, the motion vector of the encoding block may be determined.

Fig. 9 is a flow chart showing sequence of search of the motion vector in the image encoding apparatus K2. Initially, at step 901, detection of the motion vector in the horizontal direction ranges from H_SRT to H_END and detection of the motion vector in the vertical direction in the vertical direction ranges from V_SRT to V_END. Furthermore, detection accuracy in the horizontal direction is set as H_INTERVAL and detection accuracy in the vertical direction is set as V_INTERVAL. Step 901 is followed by step 902.

At step 902, a minimum value of the predictive error values and its motion vector are initialized. If their initial values are given, the values are set. In case their initial vales are not given, a value larger than a maximum value capable of being assumed as a minimum predictive error value is set and an initial value of the motion vector is not set. Step 902 is followed by step 903.

At step 903, the horizontal motion vector is set to H_SRT and the vertical motion vector is set to V_SRT. Step 903 is followed by step 904.

At step 904, it is judged whether or not the motion vector is the initialized motion vector value. In the case of "YES" at step 904, the program flow proceeds to step 910. Otherwise, the program flow proceeds to step 905.

At step 905, a reference block which is shifted through the motion vector from a corresponding position of the encoding block in the search area is formulated. Step 905 is followed by step 906.

At step 906, a predictive error value between the encoding block and the reference block is obtained. At this time, in order to calculate the predictive error value, a sum of absolute values of differences between corresponding pixels of the two blocks is employed. Step 906 is followed by step 907.

At step 907, the calculated predictive error value is compared with the minimum predictive error value. If the calculated predictive error value is smaller than the minimum predictive error value, the program flow proceeds to step 908. Otherwise, the program flow proceeds to step 910.

At step 908, the minimum predictive error value is updated to the calculated predictive error value. Step 908 is followed by step 909.

At step 909, the motion vector corresponding to the minimum predictive error value is updated. Step 909 is followed by step 910.

At step 910, H_INTERVAL is added to the horizontal motion vector. Step 910 is followed by step 911.

At step 911, it is judged whether or not the horizontal motion vector is larger than H_END. In the case of "YES", the program flow proceeds to step 912. Otherwise, the program flow returns to step 904.

At step 912, the horizontal motion vector is set to H_SRT and V_INTERVAL is added to the vertical motion vector. Step 912 is followed by step 913.

At step 913, it is judged whether or not the vertical motion vector is larger than V_END. In the case of "YES" at step 913, the program flow proceeds to step 914.

At step 914, the motion vector of the minimum predictive error value is detected as the motion vector. Thus, processing is terminated.

Meanwhile, for example, when the motion vector value of the preceding step is preliminarily calculated as in the second and third steps of the three-step method and its detection result is used, initialization of the motion vector in Fig. 9 is performed.

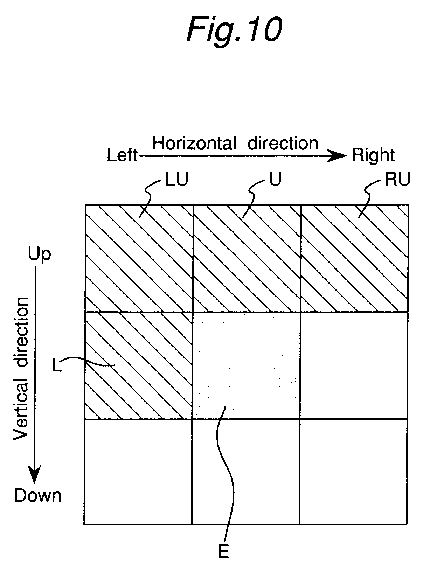

A method of calculating the probable vector by the search data calculator 702 is described with reference to Fig. 10. Encoding is performed from a left upper block LU rightwards sequentially. When processing of one horizontal macro-block line has been completed, processing of the next horizontal macro-block line is performed. In Fig. 10, averages of horizontal and vertical motion vector values of four blocks abutting on an encoding block E, i.e., the left upper block LU, an upper block U, a right upper block RU and a left block L are used as predictive values. At this time, capacity required of the motion vector memory 701 corresponds to the motion vector having the number of the horizontal blocks plus 1. Meanwhile, in order to calculate the probable vector, a median or a most frequent value of the motion vectors may be used in place of the average of the motion vectors.

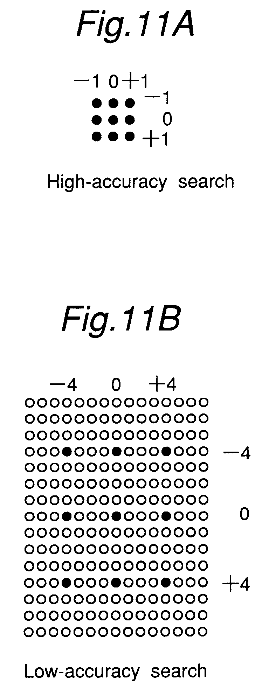

Figs. 11A and 11B show the numbers of searches of the motion vector in the case where the probable vector is calculated and search of the motion vector is performed at two different accuracies. As shown in Figs. 11A and 11B, in case a probable vector and eight pixels abutting on the probable vector is searched by the high-accuracy arithmetic unit 703 and the low-accuracy arithmetic unit 704, the numbers of searches are nine and nine, respectively. As a result, a total number of searches reaches 18.

At this time, a motion vector value at a search point of the high-accuracy arithmetic unit 703 is equal to the motion vector value of the encoding block when an area of the blocks is in a still state, at the time of panning zoom, when an object moves at an identical speed, etc. Meanwhile, a motion vector value at a search point of the low-accuracy arithmetic unit 704 is equal to the motion vector of the encoding block at a boundary between areas of different speeds, at an area which does not exist in a preceding frame, etc. By providing the low-accuracy arithmetic unit 704, search of the motion vector in the full search area is performed even in case the motion vector does not exist in a neighboring area of the probable vector. As a result, since a large error of the motion vector is not made, deterioration of image quality can be prevented.

In the image encoding apparatus K2 according to the second embodiment of the present invention as described above, by performing processing of the high-accuracy arithmetic unit 703 and that of the low-accuracy arithmetic unit 704 in parallel, detection of the motion vector can be performed in one step. Therefore, processing period can be reduced to about one-third of that of the three-step method or a circuit for performing pipeline processing for avoiding increase of processing period is not required to be added. Meanwhile, the number of searches of the motion vector can be reduced to not more than one-tenth of that of the full search method. Furthermore, since accuracy of the probable vector is improved by the search data calculator 702 and a substantial error of the motion vector is obviated by the low-accuracy arithmetic unit 704, image quality can be improved to that approximate to that of the full search method. Meanwhile, in this embodiment, search accuracy is set to one pixel. However, in case search accuracy is set to 0.5 pixel, search of a total of 17 search points including the nine search points of high-accuracy detection of the motion vector shown in Fig. 11A and eight neighboring pixels at an accuracy of 0.5 pixel is performed in one step so as to detect the motion vector. Namely, also when search accuracy is 0.5 pixel, the motion vector can be detected in one step.

Accordingly, in the image encoding apparatus K2 according to the second embodiment of the present invention, by performing processing of the high-accuracy arithmetic unit and that of the low-accuracy arithmetic unit in parallel, the motion vector can be detected in one step. Thus, processing period can be reduced as compared with that of the three-step method or a circuit for performing pipeline processing for avoiding increase of processing period is not required to be added. Meanwhile, the number of searches of the motion vector can be reduced greatly in comparison with that of the full search method. Furthermore, by using high-accuracy search and low-accuracy search in combination, image quality can be improved to that approximate to that of the full search method.

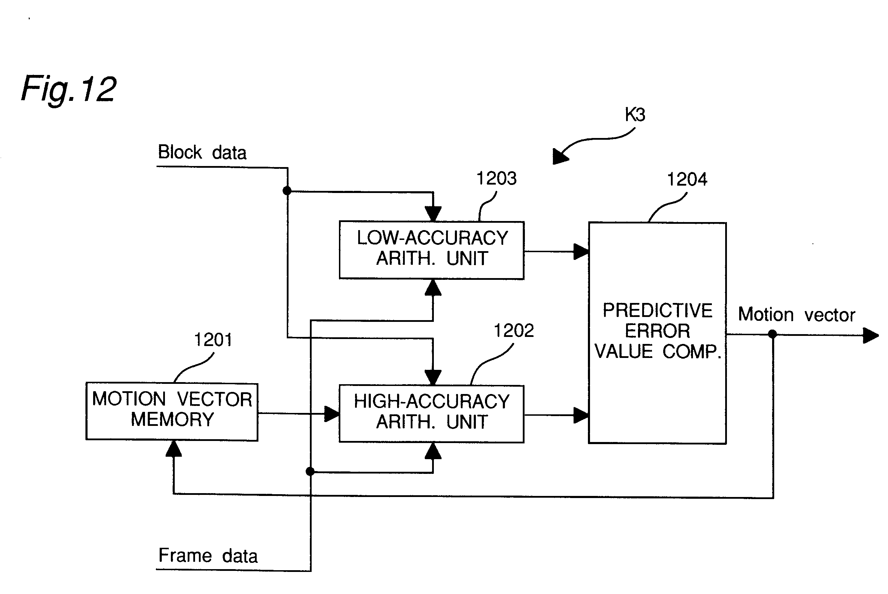

Such a case may happen in which since reduction of processing period by the second embodiment of the present invention constitutes a stumbling block to achievement of the image encoding apparatus, processing period should be reduced further. Hereinbelow, an image encoding apparatus K3 according to a third embodiment of the present invention in which capacity of a motion vector memory is reduced to that required for an immediately preceding motion vector value and the motion vector can be detected by using the immediately preceding motion vector value as a probable vector is described with reference to Fig. 12. In the image encoding apparatus K3, function of a motion vector memory 1201 is different from that of the motion vector memory 104 of the image encoding apparatus K1, while the search data calculator 105 and the motion vector detector 106 of the image encoding apparatus K1 are replaced by other elements. Thus, only the above mentioned arrangements different from those of the image encoding apparatus K1 are illustrated in Fig. 12.

In Fig. 12, a preset search area for detecting a motion vector, on a referential frame is referred to as a first search area. The motion vector memory 1201 stores a motion vector value of an immediately preceding encoding block.

The image encoding apparatus K3 includes a high-accuracy arithmetic unit 1202, a low-accuracy arithmetic unit 1203 and a predictive error value comparator 1204. The high-accuracy arithmetic unit 1202 sets a second search area which not only includes a block predicted by the motion vector value stored in the motion vector memory 1201 but is smaller than the search area on the referential frame. Then, the high-accuracy arithmetic unit 1202 sets probable vectors in the second search area at an accuracy of one pixel or less and calculates predictive error values for the probable vectors, respectively. The low-accuracy arithmetic unit 1203 sets probable vectors in the first search area on the referential frame at an accuracy of two pixels or more and calculates predictive error values for the probable vectors, respectively. By comparing the predictive error values calculated by the high-accuracy arithmetic unit 1202 with the predictive error values calculated by the low-frequency arithmetic unit 1203, the predictive error value comparator 1204 determines a motion vector of an encoding block.

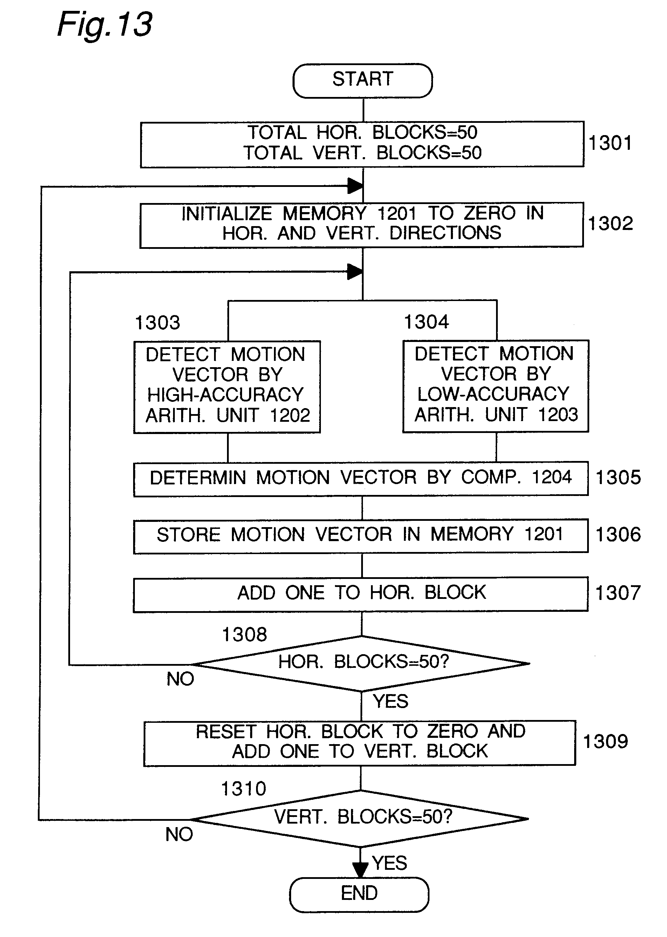

Fig. 13 is a flow chart showing operation of the elements of the image encoding apparatus K3 shown in Fig. 12. Hereinbelow, processing sequence of one frame in the case of a second frame or thereafter is described. At step 1301, the numbers of pixels in horizontal and vertical directions of the frame are set to 800 and 800, respectively and each block has 16 horizontal pixels and 16 vertical pixels. Thus, the numbers of horizontal blocks and vertical blocks are 50 and 50, respectively. Meanwhile, initial values of the horizontal and vertical blocks are set to 0 and 0, respectively. Then, at step 1302, horizontal and vertical directions of the motion vector memory 1201 are set as HP and VP, respectively and are initialized to 0. Step 1302 is followed by steps 1303 and 1304.

At step 1303, by using data of the encoding block and data of the search area, the motion vector is detected by the high-accuracy arithmetic unit 1204 in the method indicated by the flow chart of Fig. 9. Supposing that eight pixels abutting on the value stored in the motion vector memory 1201 as their center are searched, detection of the motion vector in the horizontal direction ranges from HP-1 to HP+1 and detection of the motion vector in the vertical direction ranges from VP-1 to VP+1. Furthermore, search accuracy in the horizontal and vertical directions is set to one pixel. Meanwhile, a minimum predictive error value and an initial set value of its motion vector are not given. A detected motion vector is set as HH and VH in the horizontal and vertical directions, respectively and a minimum predictive error value at this time is set as EH. Step 1303 is followed by step 1305.

At step 1304, by using data of the encoding block and data of the search area, the motion vector is detected by the low-accuracy arithmetic unit 1203 in the method indicated by the flow chart of Fig. 9. At this time, detection of the motion vector in the horizontal direction ranges from -4 to +4 and detection of the motion vector in the vertical direction ranges from -4 to +4. Furthermore, search accuracy in the horizontal and horizontal directions is set to four pixels. Meanwhile, a minimum predictive error value and an initial set value of its motion vector are not given. A detected motion vector is set as HL and VL in the horizontal and vertical directions, respectively and a minimum predictive error value at this time is set as EL. Step 1304 is followed by step 1305.

At step 1305, the predictive error value EH of the motion vector calculated by the high-accuracy arithmetic unit 1202 is compared with the predictive error value EL of the motion vector calculated by the low-accuracy arithmetic unit 1203 by the predictive error value comparator 1204. When the predictive error value EL is smaller than the predictive error value EH, HL and VL are determined as the motion vector value of the encoding block. Otherwise, HH and VH are determined as the motion vector value of the encoding block. Step 1305 is followed by step 1306.

At step 1306, the motion vector determined by the predictive error value comparator 1204 is stored in the motion vector memory 701. Step 1306 is followed by step 1307.

At step 1307, one is added to the horizontal block of the encoding frame. Step 1307 is followed by step 1308.

At step 1308, it is judged whether or not the number of the horizontal blocks of the encoding frame is equal to 50. In the case of "YES" at step 1308, the program flow proceeds to step 1309. Otherwise, the program flow returns to steps 1303 and 1304.

At step 1309, the horizontal block of the encoding frame is reset to zero and one is added to the vertical block of the encoding frame. Step 1309 is followed by step 1310.

At step 1310, it is judged whether or not the number of the vertical blocks of the encoding frame is equal to 50. In the case of "YES" at step 1310, processing is terminated. Otherwise, the program flow returns to step 1302.

In this embodiment, after the motion vectors have been detected by the high-accuracy arithmetic unit 1202 and the low-accuracy arithmetic unit 1203, respectively, the motion vector of the encoding block is determined through comparison between their predictive error values by the predictive error value comparator 1204. However, this procedure may be changed as follows. Namely, all predictive error values between the encoding block and blocks corresponding to respective search points are extracted by the high-accuracy arithmetic unit 1202. Meanwhile, all predictive error values between the encoding block and blocks corresponding to respective search points are extracted by the low-accuracy arithmetic unit 1203. Thus, by comparing the predictive error values of the high-accuracy arithmetic unit 1202 with the predictive error values of the low-accuracy arithmetic unit 1203 by the predictive error value comparator 1204, the motion vector of the encoding block may be determined.

In the image encoding apparatus K3 according to the third embodiment of the present invention as described above, by using the immediately preceding motion vector value as the probable vector, the search data calculator can be eliminated and capacity of the motion vector memory can be reduced to only the immediately preceding motion vector value, so that the motion vector can be detected in a construction simpler than that of the first embodiment of the present invention.

In order to effect further reduction of the circuit, pixel skipping can be used together. Especially, when one pixel is skipped in each of the vertical lines, namely, vertical (1/2) pixel skipping is performed such that the motion vector is detected by only data of one field, pixel data of the search area required for detecting the motion vector is reduced to its half. As a result, period necessary for memory access can be reduced to its half. Therefore, when a circuit in which a system clock runs fast is constituted by a plurality of channels in case pixel skipping is not employed, the number of the channels can be reduced.

Accordingly, in the image encoding apparatus K3 according to the third embodiment of the present invention, by performing processing of the high-accuracy arithmetic unit and that of the low-accuracy arithmetic unit in parallel, the motion vector can be detected in one step. Thus, processing period can be reduced as compared with that of the three-step method or a circuit for performing pipeline processing for avoiding increase of processing period is not required to be added. Meanwhile, the number of searches of the motion vector can be reduced greatly in comparison with that of the full search method. Furthermore, by using the immediately motion vector value as the probable vector, the search data calculator can be eliminated and capacity of the motion vector memory can be reduced to only the immediately preceding vector value. In addition, if vertical (1/2) pixel skipping is employed together when the circuit is constituted by a plurality of channels, the number of the channels can be reduced. Meanwhile, by using high-accuracy search and low-accuracy search in combination, image quality can be improved to that approximate to that of the full search method.

In conventional methods, a motion vector leading to a minimum predictive error value is determined as the motion vector of the encoding block. Therefore, in an area in which both the encoding block and the search area are of an identical pattern such as background wall of an identical luminance, such a case may happen that difference of correlative value decreases and thus, the motion vector value is scattered to various values.

In the procedures shown in the first to third embodiments of the present invention, the area to be closely searched is determined by using the detected motion vector value of the block abutting on the encoding block. However, in these procedures, since the motion vector value of the neighboring block is scattered to various values in detection of the motion vector in the area of an identical pattern, a probability that the motion vector of the encoding block does not fall in the area to be closely searched increases. Therefore, such a problem arises that predictive accuracy of the motion vector drops at a boundary between the areas of an identical pattern, thereby resulting in drop of encoding efficiency.

Meanwhile, if a method is employed in which when the motion vector is encoded, difference value between the motion vector and that of the immediately preceding block is subjected to encoding of variable length, encoding efficiency is improved for the following reason. Namely, since in usually appearing images such as an image in still state, an image at the time of panning zoom, etc., difference value at an area other than edges of a moving object falls in the neighborhood of 0 in a concentrated manner, encoding quantity can be lessened by subjecting difference value to encoding of variable length.

When the motion vector is detected in an area of an identical pattern by employing this encoding method, substantially no difference exist in predictive error value for determining the predictive block. Thus, since a probability that the motion vector is detected at various values rises, encoding efficiency drops undesirably when the motion vector is subjected to difference encoding.

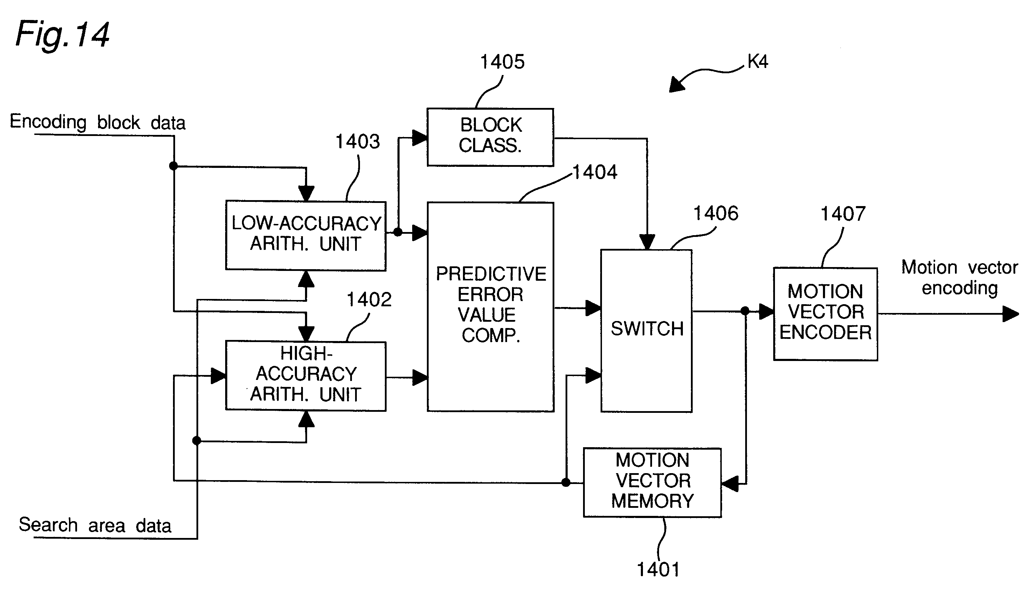

A fourth embodiment of the present invention is designed to raise a frequency that a motion vector value encoded immediately before or a value in the neighborhood of this motion vector value is selected in an area of an identical pattern. Fig. 14 shows an image encoding apparatus K4 according to the fourth embodiment of the present invention. In the image encoding apparatus K4, functions of a motion vector memory 1401 and a motion vector encoder 1407 are different from those of the motion vector memory 104 and the motion vector encoder 107 of the image encoding apparatus K1, while the search data calculator 105 and the motion vector detector 106 of the image encoding apparatus K1 are replaced by other elements. Thus, only the above mentioned arrangements different from those of the image encoding apparatus K1 are illustrated in Fig.14.

In Fig. 14, input image data divided into blocks is referred to as an encoding block and an area on a referential frame, which is subjected to block matching with the encoding block, is referred to as a search area. Meanwhile, in case both the encoding block and the search area include an area of an identical luminance such as background wall, the encoding block is referred to as a block of an identical pattern.

In Fig. 14, a preset search area for detecting a motion vector, on a referential frame is referred to as a first search area. The motion vector memory 1401 stores a motion vector value of an immediately preceding encoding block.

The image encoding apparatus K4 includes a high-accuracy arithmetic unit 1402, a low-accuracy arithmetic unit 1403 and a predictive error value comparator 1404. The high-accuracy arithmetic unit 1402 sets a second search area which not only includes a block predicted by the motion vector value stored in the motion vector memory 1401 but is smaller than the search area on the referential frame. Then, the high-accuracy arithmetic unit 1402 sets probable vectors in the second search area at an accuracy of one pixel and calculates predictive error values for the probable vectors, respectively. The low-accuracy arithmetic unit 1403 sets probable vectors in the first search area on the referential frame at an accuracy of four pixels and calculates predictive error values for the probable vectors, respectively. By comparing the predictive error values calculated by the high-accuracy arithmetic unit 1402 with the predictive error values calculated by the low-frequency arithmetic unit 1403, the predictive error value comparator 1404 obtains a motion vector value having a minimum predictive error.

The image encoding apparatus K4 further includes a block classifier 1405 and a switch 1406. The block classifier 1405 classifies the encoding block into that of an identical pattern and that of no identical pattern by using statistical amount of a group of the predictive error values. If the encoding block is classified into that of an identical pattern by the block classifier 1405, the motion vector value stored in the motion vector memory 1401 is selected as the motion vector value of the encoding block by the switch 1406. Otherwise, the motion vector value corresponding to the minimum predictive error value obtained by the predictive error value comparator 1404 is selected as the motion vector value of the encoding block by the switch 1406. Meanwhile, a difference value of the motion vector value selected by the switch 1406 is subjected to encoding of variable length by the motion vector encoder 1407.

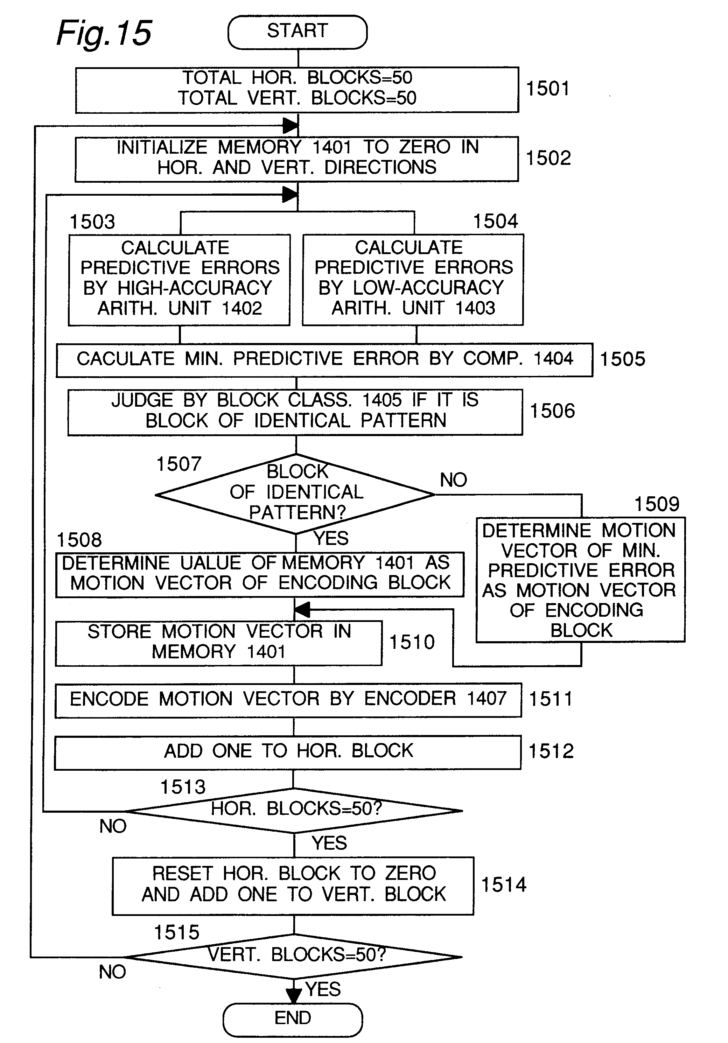

Operation of the image encoding apparatus K4 of the above mentioned arrangement is described with reference to Fig. 15, hereinbelow. Meanwhile, only detection and encoding of the motion vector in the image encoding apparatus K4, which are subject matter of the present invention, are described in detail. Hereinbelow, processing sequence of image data of a second frame is described. At step 1501, the numbers of pixels in horizontal and vertical directions of the frame are set to 800 and 800, respectively and each block has 16 horizontal pixels and 16 vertical pixels. Thus, the numbers of horizontal blocks and vertical blocks are 50 and 50, respectively. Meanwhile, initial values of the horizontal and vertical blocks are set to 0 and 0, respectively. Then, at step 1502, the motion vector memory 1501 is initialized to 0 in both horizontal and vertical directions. Step 1502 is followed by steps 1503 and 1504.

At step 1503, the high-accuracy arithmetic unit 1402 sets the second search area from the value stored in the motion vector memory 1401 and sets probable vectors in the second search area at an accuracy of one pixel so as to calculate predictive error values for the probable vectors, respectively. Step 1503 is followed by step 1505.

At step 1504, the low-accuracy arithmetic unit 1403 sets probable vectors in the first search area at an accuracy of four pixels and calculates predictive error values for the probable vectors, respectively. Step 1504 is followed by step 1505.

At step 1505, a motion vector having a minimum predictive error value is obtained by the predictive error value comparator 1404 from a group of the predictive error values obtained by the high-accuracy arithmetic unit 1402 and the low-accuracy arithmetic unit 1403. Step 1505 is followed by step 1506.

At step 1506, the block classifier 1405 judges whether or not the encoding block is that of an identical pattern. In this judgement, when a maximum value of 21 predictive error values obtained by the low-accuracy arithmetic unit 1403 is not more than a threshold value, the encoding block is judged as that of an identical pattern. Step 1506 is followed by step 1507.

If the encoding block is that of an identical pattern at step 1507, the program flow proceeds to step 1508. Otherwise, the program flow proceeds to step 1509.

At step 1508, the value of the motion vector memory 1401 is determined as the motion vector value of the encoding block. Step 1508 is followed by step 1510.

At step 1509, a motion vector value having a minimum predictive error value obtained by the predictive error value comparator 1404 is determined as the motion vector value of the encoding block. Step 1509 is followed by step 1510.

At step 1510, the motion vector value of the encoding block is stored in the motion vector memory 1401. Step 1510 is followed by step 1511.

At step 1511, a difference value of the motion vector value selected by the switch 1406 is subjected to encoding of variable length by the motion vector encoder 1407. Step 1511 is followed by step 1512.

At step 1512, one is added to the horizontal block of the encoding frame. Step 1512 is followed by step 1513.

At step 1513, it is judged whether or not the number of the horizontal blocks of the encoding frame is equal to 50. In the case of "YES" at step 1513, the program flow proceeds to step 1514. Otherwise, the program flow returns to steps 1503 and 1504.

At step 1514, the horizontal block of the encoding frame is reset to zero and one is added to the vertical block of the encoding frame. Step 1514 is followed by step 1515.

At step 1515, it is judged whether or not the number of the vertical blocks of the encoding frame is equal to 50. In the case of "YES" at step 1515, processing is terminated. Otherwise, the program flow returns to step 1502.

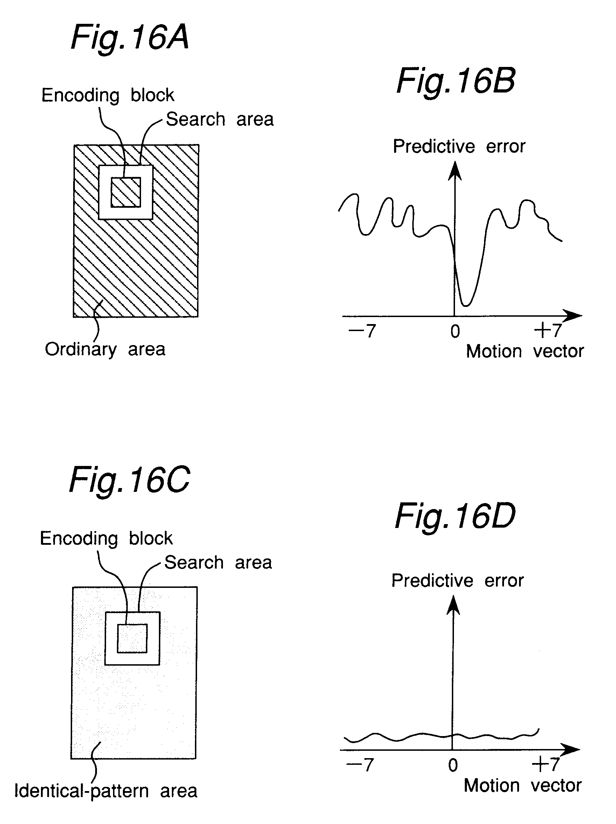

Hereinbelow, judgement of the encoding block of an identical pattern is described with reference to Figs. 16A to 16D. Figs. 16A to 16D show distribution of predictive error value relative to motion vector value for judging the encoding block of an identical pattern by using the predictive error value. Fig. 16A shows detection of the encoding block in the case where both the encoding block and the search area are disposed in an area (referred to as an "ordinary area", hereinbelow) other than an area of an identical pattern such as a background wall of an identical luminance. Meanwhile, Fig. 16B shows distribution of predictive error value relative to motion vector value in the ordinary area. Although motion vector value can be expressed in two dimensions of horizontal and vertical directions, Fig. 16B shows predictive error value in horizontal or vertical direction, which includes a minimum predictive error value. In the ordinary area, since the search area contains only one block coincident with the encoding block, predictive error value is small at the coincident position but becomes large at other positions. On the other hand, Fig. 16C shows detection of the encoding block in the case where both the encoding block and the search area are disposed in an area of an identical pattern (referred to as an "identical-pattern area", hereinbelow) such as background wall of an identical luminance. Meanwhile, Fig. 16D shows distribution of predictive error value relative to motion vector value in the identical-pattern area. In the identical-pattern area, since luminance of the encoding block is similar to that of a predictive block in the search area, predictive error value is small for all the motion vector values and variations of predictive error value are also small.

Therefore, in the identical-pattern area, since the motion vector is determined by slight difference of predictive error values, the motion vector value is scattered to various values. As a result, since a probability that the motion vector of the encoding block does not fall in an area to be closed searched, predictive accuracy drops at a boundary of the identical-pattern area, thereby resulting in drop of encoding efficiency. Meanwhile, in case the motion vector value is subjected to difference encoding, encoding efficiency drops. Thus, when it is judged that the encoding block is that of an identical pattern, encoding efficiency of the motion vector can be raised by using a motion vector value of an immediately preceding encoding block as the motion vector value.

In pattern of block matching shown in Fig. 16C, the following two features (A) and (B) are found from distribution of predictive error value shown in Fig. 16D.
(A) All predictive error values for blocks in the search area are small.
(B) Variations of predictive error values for blocks in the search area are small.

From the feature (A), the following decision criteria (a) and (b) can be employed.
(a) Case in which a maximum predictive error value is not more than a threshold value
(b) Case in which an average predictive error value is not more than a threshold value

From the feature (B), the following decision criteria (c), (d) and (e) can be employed.
(c) Case in which a variance value of the predictive error value is not more than a threshold value
(d) Case in which a sum of absolute values of differences between an average predictive error value and respective predictive error values is not more than a threshold value
(e) Case in which a difference between a maximum predictive error value and a minimum predictive error value is not more than a threshold value

By using these features, it is possible to judge the encoding block of an identical pattern.

In this embodiment, the decision criterion (a) which can be implemented by a simple arrangement is employed but may be replaced by one of the remaining decision criteria.

By employing the image encoding apparatus K4 according to the fourth embodiment of the present invention as described above, the motion vector value of the encoding block can be set to the motion vector value of the immediately preceding encoding block. As a result, since a probability that at a boundary of the identical-pattern area, the motion vector is detected in an area to be closely searched rises, encoding efficiency is improved. Meanwhile, since a frequency that difference value of the motion vector becomes zero is raised, encoding efficiency of the motion vector can be raised by subjecting difference value of the motion vector to encoding of variable length. Meanwhile, in this embodiment, the predictive error value used in the block classifier 1405 is obtained from a group of the predictive error values calculated by the low-accuracy arithmetic unit 1403 but may also be used for the full search method or the first step of the three-step method.

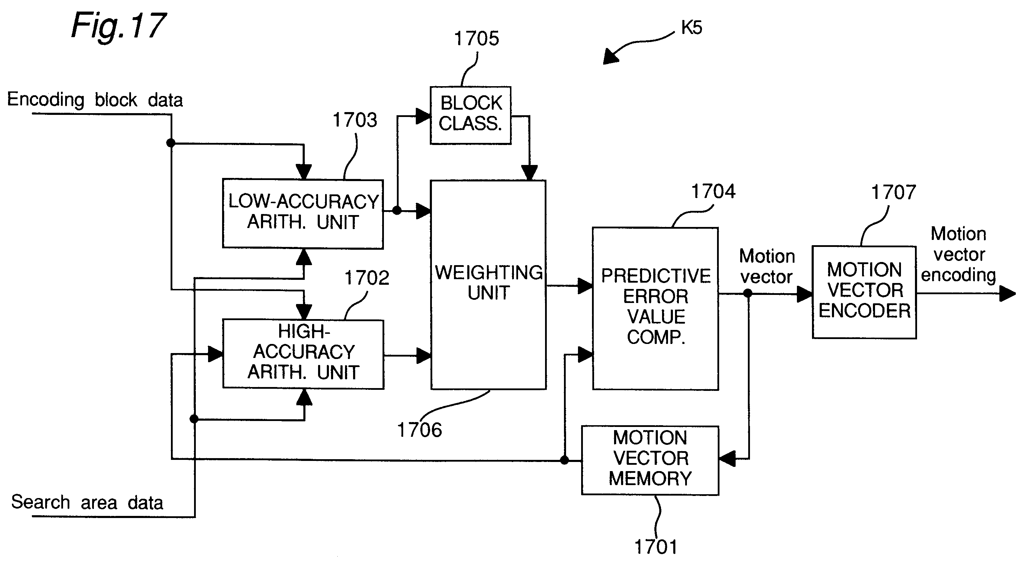

In the fourth embodiment of the present invention, the full search area is of an identical pattern. However, since the full search area is not necessarily included in the identical-pattern area in the encoding block in the neighborhood of a boundary of the identical-pattern area, such a case may happen that the encoding block is not judged as that of an identical pattern in the method of the fourth embodiment of the present invention. In an image encoding apparatus K5 according to a fifth embodiment of the present invention, even when the search area includes a boundary of the identical-pattern area, it is possible to judge the block of an identical pattern. Fig. 17 shows the image encoding apparatus K5. In the image encoding apparatus K5, functions of a motion vector memory 1701 and a motion vector encoder 107 are different from those of the motion vector memory 104 and the motion vector encoder 107 of the image encoding apparatus K1, while the search data calculator 105 and the motion vector detector 106 of the image encoding apparatus K1 are replaced by other elements. Thus, in Fig. 17, only the above mentioned arrangements different from those of the image encoding apparatus K1 are illustrated.

In Fig. 17, input image data divided into blocks is referred to as an encoding block and an area on a referential frame, which is subjected to block matching with the encoding block, is referred to as a search area. Meanwhile, in case both the encoding block and the search area include an area of an identical luminance such as background wall, the encoding block is referred to as a block of an identical pattern.

In Fig. 17, a preset search area for detecting a motion vector, on a referential frame is referred to as a first search area. The motion vector memory 1701 stores a motion vector value of an immdiately preceding encoding block.

The image encoding apparatus K5 includes a high-accuracy arithmetic unit 1702, a low-accuracy arithmetic unit 1703 and a predictive error value comparator 1704. The high-accuracy arithmetic unit 1702 sets a second search area which not only includes a block predicted by the motion vector value stored in the motion vector memory 1701 but is smaller than the search area on the referential frame. Then, the high-accuracy arithmetic unit 1702 sets probable vectors in the second search area at an accuracy of one pixel and calculates predictive error values for the probable vectors, respectively. The low-accuracy arithmetic unit 1703 sets probable vectors in the first search area on the referential frame at an accuracy of four pixels and calculates predictive error values for the probable vectors, respectively. By comparing the predictive error values calculated by the high-accuracy arithmetic unit 1702 with the predictive error values calculated by the low-frequency arithmetic unit 1703, the predictive error value comparator 1704 obtains a motion vector value having a minimum predictive error.

The image encoding apparatus K5 further includes a block classifier 1705 and a weighting unit 1706. The block classifier 1705 classifies the encoding block into that of an identical pattern and that of no identical pattern by using statistical amount of a group of the predictive error values. In case the encoding block has been classified into that of an identical pattern by the block classifier 1705, the weighting unit 1706 weights the predictive error values obtained by the high-accuracy arithmetic unit 1702 and the low-accuracy arithmetic unit 1703. A difference value of the motion vector value is subjected to encoding of variable length by the motion vector encoder 1707.

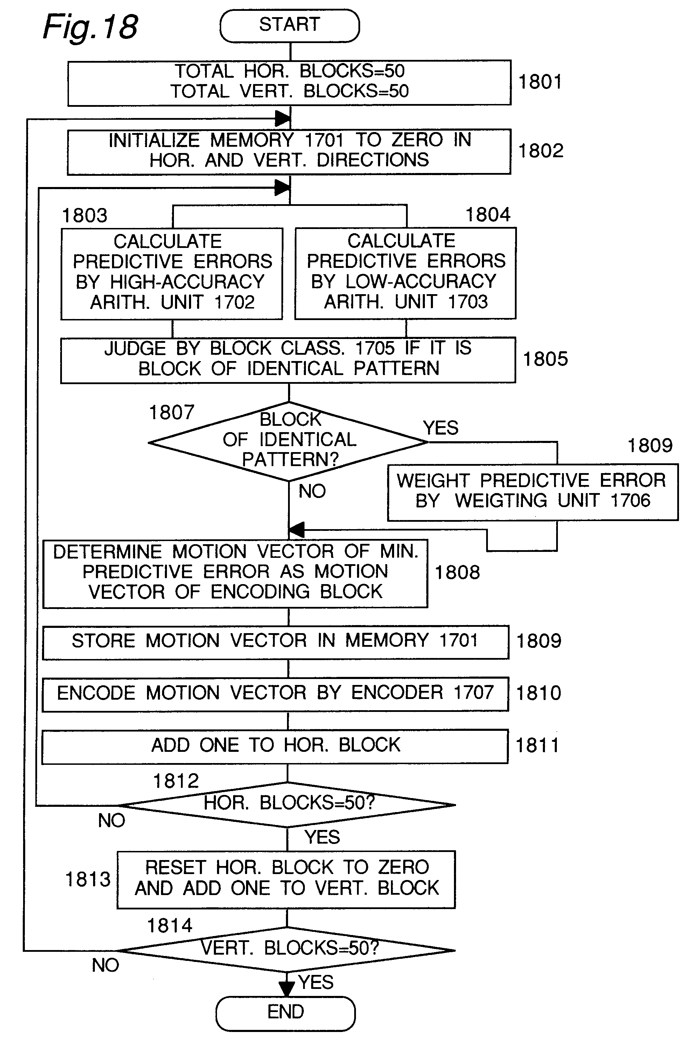

Operation of the image encoding apparatus K5 of the above mentioned arrangement is described with reference to Fig. 18, hereinbelow. Meanwhile, only detection and encoding of the motion vector in the image encoding apparatus K5, which are subject matter of the present invention, are described in detail. Hereinbelow, processing sequence of image data of a second frame is described. At step 1801, the numbers of pixels in horizontal and vertical directions of the frame are set to 800 and 800, respectively and each block has 16 horizontal pixels and 16 vertical pixels. Thus, the numbers of horizontal blocks and vertical blocks are 50 and 50, respectively. Meanwhile, initial values of the horizontal and vertical blocks are set to 0 and 0, respectively. Then, at step 1802, the motion vector memory 1701 is initialized to 0 in both horizontal and vertical directions. Step 1802 is followed by steps 1803 and 1804.

At step 1803, the high-accuracy arithmetic unit 1702 sets the second search area from the value stored in the motion vector memory 1701 and sets probable vectors in the second search area at an accuracy of one pixel so as to calculate predictive error values for the probable vectors, respectively. Step 1803 is followed by step 1805.

At step 1804, the low-accuracy arithmetic unit 1703 sets probable vectors in the first search area at an accuracy of four pixels and calculates predictive error values for the probable vectors, respectively. Step 1804 is followed by step 1805.

At step 1805, the block classifier 1705 judges whether or not the encoding block is that of an identical pattern. In this judgement, when in 21 predictive error values obtained by the low-accuracy arithmetic unit 1703, a maximum value of predictive error values having an identical horizontal or vertical component is not more than a threshold value, the encoding block is judged as that of an identical pattern. Step 1805 is followed by step 1806.

If the encoding block is that of an identical pattern at step 1806, the program flow proceeds to step 1807. Otherwise, the program flow proceeds to step 1808.

At step 1807, the predictive error value obtained by the high-accuracy arithmetic unit 1702 is weighted by the weighting unit 1706 so as to be reduced. Step 1807 is followed by step 1808.

At step 1808, a value of a motion vector located at a position where the predictive error value obtained by the predictive error value comparator 1704 assumes a minimum value is determined as the motion vector value of the encoding block. Step 1808 is followed by step 1809.

At step 1809, the motion vector value of the encoding block is stored in the motion vector memory 1701. Step 1809 is followed by step 1810.

At step 1810, a difference value of the motion vector value is subjected to encoding of variable length by the motion vector encoder 1707.

At step 1811, one is added to the horizontal block of the encoding frame. Step 1811 is followed by step 1812.

At step 1812, it is judged whether or not the number of the horizontal blocks of the encoding frame is equal to 50. In the case of "YES" at step 1812, the program flow proceeds to step 1813. Otherwise, the program flow returns to steps 1803 and 1804.

At step 1813, the horizontal block of the encoding frame is reset to zero and one is added to the vertical block of the encoding frame. Step 1813 is followed by step 1814.

At step 1814, it is judged whether or not the number of the vertical blocks of the encoding frame is equal to 50. In the case of "YES" at step 1814, processing is terminated. Otherwise, the program flow returns to step 1802.

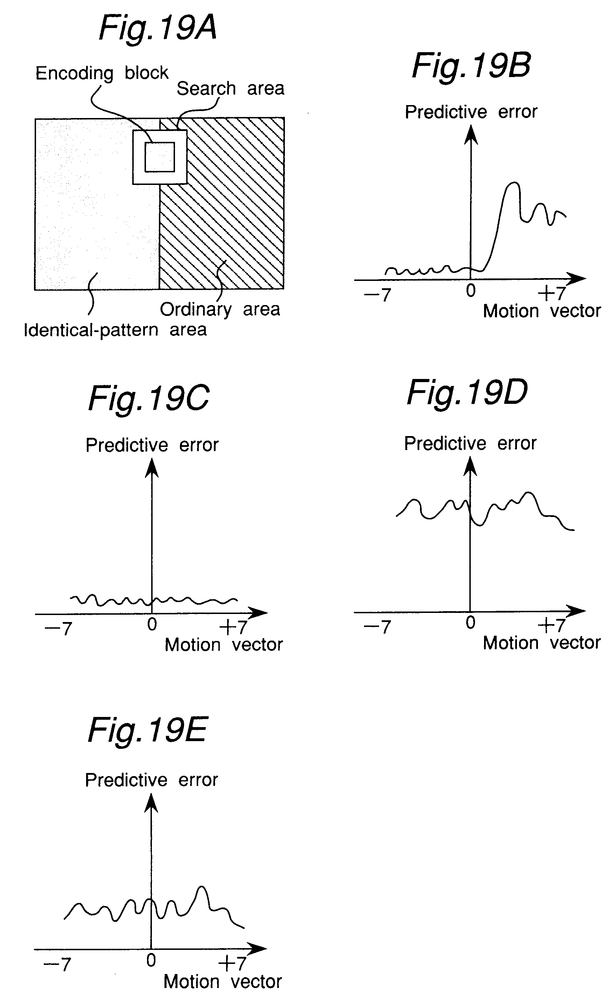

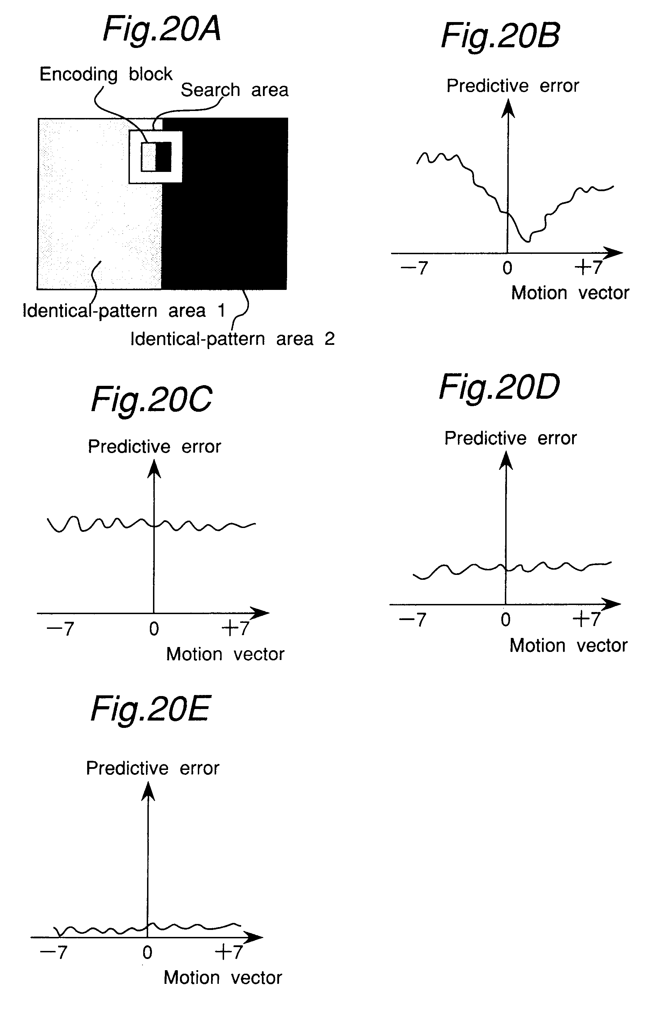

Hereinbelow, judgement of the encoding block of an identical pattern is described with reference to Figs. 19A to 19E and 20A to 20E. Figs. 19A to 19E show distribution of predictive error value relative to motion vector value in the case where the encoding block is that of an identical-pattern area and the search area extends over the identical-pattern area and the ordinary area. Meanwhile, in the case where the encoding block is that of an identical-pattern area and the search area extends over two different identical-pattern areas, judgement of the encoding block of an identical pattern can be likewise performed by using distribution of predictive error value shown in Fig. 19C and thus, the description is abbreviated for brevity.

On the other hand, Figs. 20A to 20E show distribution of predictive error value relative to motion vector value in the case where the encoding block includes two different identical-pattern areas. Meanwhile, in case the encoding block includes an identical-pattern area and an ordinary area, it is possible to determine a predictive block from partial difference of the ordinary area.

Fig. 19A shows detection of the motion vector in the case where the encoding block is that of an identical-pattern area and the search area extends over the identical-pattern area and the ordinary area. Fig. 19B shows distribution of predictive error value relative to horizontal motion vector value. Although motion vector value can be expressed in two dimensions of horizontal and vertical directions, Fig. 19B shows predictive error value including a minimum motion vector value. In case the predictive block falls in the identical-pattern area, both magnitude and variations of predictive error value are small. Meanwhile, when the encoding block falls in the ordinary area, both magnitude and variations of predictive error value are large.

Fig. 19C shows distribution of predictive error value relative to vertical motion vector value in the case where the encoding block falls in the identical-pattern area. At this time, since luminance of the encoding block is similar to that of the predictive block, both magnitude and variations of predictive error value are large.

Fig. 19D shows distribution of predictive error value relative to vertical motion vector value in the case where the predictive block falls in the identical-pattern area. At this time, since correlation between the encoding block and the predictive block is low, both magnitude and variations of predictive error value are large.

Fig. 19E shows distribution of vertical predictive error value in the case where the predictive block extends over the identical-pattern area and the ordinary area. In the predictive block, since correlation of a portion of the identical-pattern area is high and correlation of a portion of the ordinary area is low, distribution of predictive error value falls between that of Fig. 19C and 19D.

On the other hand, Fig. 20A shows detection of motion vector in the case where both the encoding block and the search area extends over two different identical-pattern areas 1 and 2.

Fig. 20B shows distribution of predictive error value relative to horizontal motion vector value, which includes a minimum predictive error value. Initially, when the predictive block falls in the identical-pattern area 1, difference in luminance in a portion of the identical-pattern area 1 in the encoding block is small, while difference in luminance in a portion of the identical-pattern area 2 in the encoding block is large. However, since the identical-pattern areas 1 and 2 are identical-pattern areas, difference in luminance for each predictive block is substantially constant. Therefore, predictive error value becomes substantially constant.

Then, when the predictive block falls in the identical-pattern area 2, difference in luminance in a portion of the identical-pattern area 2 in the encoding block is small, while difference in luminance in a portion of the identical-pattern area 1 in the encoding block is large. However, difference in luminance for each predictive block is substantially constant. Thus, predictive error value becomes substantially uniform. Furthermore, in case the predictive block includes two identical-pattern areas, a portion of one identical-pattern area different from that of the encoding block increases in proportion of increase or decrease of motion vector value having a minimum value at which predictive error value becomes a minimum. Therefore, predictive error value increases in proportion to motion vector value.

Fig. 20C shows detection of vertical motion vector in the case where a predictive area falls in the identical-pattern area 1. At this time, since a difference value between the portion of the identical-pattern area 2 and the identical-pattern area 1 in the encoding block is a substantially constant value of a certain magnitude, magnitude of predictive error value also becomes constant.

Fig. 20D shows distribution of predictive error value relative to vertical motion vector value in the case where a predictive area falls in the identical-pattern area 2. At this time, magnitude of predictive error value becomes substantially constant as in Fig. 20C.

Fig. 20E shows distribution of vertical predictive error value including a minimum predictive error value. Since difference in luminance between all predictive blocks and the encoding block is small, both magnitude and variations of predictive error value are small.

Therefore, when a boundary of the identical-pattern area is horizontal or vertical, judgement of the encoding block of an identical pattern is performed for a plurality of predictive error value groups in which horizontal or vertical component of the motion vector is identical. Then, if at least one of the predictive error value group satisfies judgement of the encoding block of an identical pattern, it is possible to regard the encoding block as including the identical-pattern area. Furthermore, this condition also applies to a case shown in Fig. 16C in which the search area is included in the identical-pattern area.

Meanwhile, the following weighting methods (1) to (4) may be adopted.
(1) Weighting employing only an immediately preceding motion vector value is performed.
(2) Weighting for reducing predictive error value of an immediately preceding motion vector value is performed.
(3) Weighting employing only predictive error value obtained by the high-accuracy arithmetic unit 1702 is performed.
(4) Weighting for reducing predictive error value obtained by the high-accuracy arithmetic unit 1702 is preformed.

In the method (1), difference encoding efficiency is improved but encoding efficiency drops when predictive error value corresponding in position to the preceding motion vector value is large.

In the method (2), by weighting predictive error value corresponding in position to the immediately preceding motion vector value, a probability that the immediately preceding motion vector value is selected is raised and the immediately preceding motion vector is not selected when predictive error value is large. In this case, multiplication function for weighting is necessary.

In the method (3), by using only predictive error values abutting on a position corresponding to an immediately preceding vector value obtained by the high-accuracy arithmetic unit 1702, difference encoding efficiency is improved and encoding efficiency is improved by using a plurality of the predictive error values.

In the method (4), weighting is performed so as to enable further improvement of encoding efficiency of the method (1). In this case, multiplication function for weighting is necessary.

In the image encoding apparatus K5 as described above, by performing judgement of the encoding block of an identical pattern in the encoding block including the identical-pattern area, motion vector value of the encoding block can be set to motion vector value of an immediately preceding encoding block and thus, a probability that difference value of the motion vector assumes zero rises. Therefore, by subjecting difference value of the motion vector to encoding of variable length, encoding efficiency of the motion vector can be raised.

Meanwhile, as compared with the fourth embodiment, since judgement of the encoding block of an identical pattern can be performed also for the encoding block disposed in the neighborhood of a boundary of the identical-pattern area, accuracy for detecting the encoding block of an identical pattern is raised, so that encoding efficiency of the motion vector can be improved.

Meanwhile, it is assumed here that a boundary between the identical-pattern area and the ordinary area is horizontal or vertical. However, when processing is preformed by using a group of predictive error values on an oblique line or an arbitrary curve, it is possible to handle various boundaries.

## Claims

1. An image encoding apparatus (K1) comprising:
a blocking unit (102) for dividing a first image signal into a plurality of blocks;
a frame memory (103) for storing a second image signal of a preceding frame;
a motion vector memory (104) for storing motion vector data of a block abutting on an encoding block;
a search data calculator (105) which calculates one probable vector from the motion vector data stored in the motion vector memory (104) and calculates as search data, data for setting as a first area for closely searching for a motion vector, an area not only including a block predicted by the probable vector but smaller than a search area on a referential frame and for setting as a second area for roughly searching for the motion vector, an area including a search area other than the first area; and
a motion vector detector (106) for detecting the motion vector from the first and second image signals by using the search data.

2. An image encoding apparatus as claimed in claim 1, further comprising:
a predictive block generator (108) for generating first image data for obtaining a difference from the encoding block by using the motion vector outputted from the motion vector detection (106);
a difference unit (109) for generating data on a difference value between an output of the blocking unit (102) and an output of the predictive block generator (108);
an orthogonal transform unit (110) for performing orthogonal transform of the output of the blocking unit (102) or an output of the difference unit (109);
a quantization unit (111) for quantizing an output of the orthogonal transform unit (109);
an inverse quantization unit (113) for performing inverse quantization of an output of the quantization unit (111);
an inverse orthogonal transform unit (114) for performing inverse orthogonal transform of an output of the inverse quantization unit (113); and
an adder (115) for supplying to the frame memory (103), second image data obtained by adding the first image data of the predictive block generator (108) to difference data obtained from the inverse orthogonal transform unit (114).

3. An image encoding apparatus (K1) as claimed in claim 1 or 2, wherein the block abutting on the encoding block is already detected in a frame including at least the encoding block and abuts on the encoding block spatially.

4. An image encoding apparatus (K1) as claimed in any preceding claim, wherein in a preceding frame or a subsequent frame of a frame including at least the encoding block, the block abutting on the encoding block occupies a spatial position identical with that of the encoding block in the frame.

5. An image encoding apparatus (K1) as claimed in any preceding claim, wherein the motion vector detector (106) includes a first search means, a second search means and a third search means by classifying search pixel intervals of each of the blocks in a decreasing order of density;
wherein when the motion vector of the encoding block is detected, the search data arithmetic unit (105), in case the motion vector cannot be obtained from the block abutting on the encoding block, employs the second search means and, in case the motion vector can be obtained from the block abutting on the encoding block, employs the first search means for the first area and the third search means for the second area.

6. An image encoding apparatus (K1) as claimed in claim 5, wherein the first search means is a full search means for searching for correlative intensity between frames by shifting an image of each of the blocks at a pitch of one pixel;
wherein the second search means is a two step search means which detects a most correlative block from first correlative intensity between frames by shifting the image of each of the blocks at a pitch of n pixels (n > 2) and then, search for second correlative intensity between the frames by shifting the image of each of the blocks at a pitch of one pixel in m pixels (n > m > 0) in the neighbourhood of the most correlative block;
wherein the third search means is a three step search means which searches for correlative intensity between the frames by shifting the image of each of the blocks at a pitch of s pixels (s > 3), then at a pitch of p pixels (s > p > 1) and finally at a pitch of one pixel.

7. An image encoding apparatus (K1) as claimed in any preceding claim, wherein the search data calculator (105) outputs different set data on the basis of a pattern of the block abutting on the encoding block of the motion vector and capable of being referred to.

8. An image encoding apparatus (K2) in which a search area for detecting a motion vector is preliminarily set, as a first search area, on a referential frame, comprising:
a high accuracy arithmetic unit (703) which sets a second search area including a block predicted from a motion vector value of an immediately preceding encoding block and smaller than the first search area and sets probable vectors in the second search area at an accuracy of one pixel or less so as to calculated predictive error values for the probable vectors, respectively;
a low accuracy arithmetic unit (704) which sets probable vectors in the first search area at an accuracy of two pixels or more so as to calculate predictive error values for the probable vectors, respectively; and
a predictive error value comparator (705) which compares the predictive error values calculated by the high accuracy arithmetic unit (703) with the predictive error values calculated by the low accuracy arithmetic unit (704) so as to determine a motion vector value of an encoding block.

9. An image encoding apparatus (K2) as claimed in claim 8, further comprising:
a motion vector memory (701) for storing a motion vector value of the encoding block in which the motion vector has been detected;
a search data calculator (702) for calculating one probable vector from the motion vector value stored in the motion vector memory (701), and in which the high accuracy arithmetic unit (703) sets a second search area including a block predicted by the probable vector.

10. An image encoding apparatus (K2) as claimed in claim 8 or 9, wherein the high accuracy arithmetic unit (703) and the low accuracy arithmetic unit (704) calculate the predictive error values by skipping one pixel in vertical pixels of the encoding block and the search area.

11. An image encoding apparatus (K4) in which each of blocks obtained by dividing input image data is set as an encoding block and an area on a referential frame, for block matching with the encoding block is set as a search area, comprising:
a predictive error value comparator (1404) for obtaining a minimum value of a group of predictive error values between the encoding block and a group of blocks of the search area;
a block classifier (1405) for classifying the encoding block into a pattern 1 and a pattern 2 by using statistical amount of the predictive error values; and
a switch (1406) which, when the encoding block has been classified into the pattern 1 by the block classifier (1405), selects as a motion vector value of the encoding block a motion vector value of a block abutting on the encoding block and, when the encoding block has been classified into the pattern 2 by the block classifier (1405), selects as the motion vector value of the encoding block a motion vector value corresponding to the minimum value of the predictive error values obtained by the predictive error value comparator (1404).

12. An image encoding apparatus as claimed in claim 11, wherein the search area is set as a first search area, further comprising:
a high accuracy arithmetic unit (1402) which sets a second search area including a block predicted by a motion vector value of a block abutting on the encoding block and smaller than the first search area and sets probable vectors in the second search area at an accuracy of one pixel or less so as to calculate predictive error values for the probable vectors, respectively; and
a low accuracy arithmetic unit (1403) which sets probable vectors in the first search area at an accuracy of two pixels or more so as to calculated predictive error values for the probable vectors, respectively; and wherein the predictive error value comparator (1404) compares the predictive error values calculated by the high accuracy arithmetic unit (1402) with the predictive error values calculated by the low accuracy arithmetic unit (1403) so as to obtain the minimum predictive error value.

13. An image encoding apparatus (K5) in which each of blocks obtained by dividing input image data is set as an encoding block and an area on a referential frame, for block matching with the encoding block is set as a search area, comprising:
a block classifier (1705) for classifying the encoding block into a pattern 1 and a pattern 2 by using statistical amount of a group of predictive error values between the encoding block and a group of blocks of the search area;
a weighting unit (1706) for weighting the predictive error values when the encoding block has been classified into the pattern 1 by the block classifier (1705); and
a predictive error value comparator (1704) for obtaining a minimum value of the predictive error values weighted by the weighting unit (1706).

14. An image encoding apparatus (K5) as claimed in claim 13, wherein the weighting unit (1706) less weights one of the predictive error values corresponding in position to the probable vector set by the motion vector value of the block abutting on the encoding block.

15. An image encoding apparatus (K5) as claimed in claim 13 or 14, wherein the search area is set as a first search area, further comprising:
a high accuracy arithmetic unit (1702) which sets a second search area including a block predicted by a motion vector value of a block abutting on the encoding block and smaller than the first search area and sets probable vectors in the second search area at an accuracy of one pixel or less so as to calculated predictive error values for the probable vectors, respectively; and
a low accuracy arithmetic unit (1703) which sets probable vectors in the first search area at an accuracy of two pixels or more so as to calculate predictive error values for the probable vectors, respectively.

16. An image encoding apparatus (K5) as claimed in any of claims 11 to 15, further comprising:
a motion vector encoder (1407, 1707) for subjecting a difference value of a motion vector value to encoding of variable length.

17. An image encoding apparatus (K5) as claimed in any of claims 11 to 16, wherein one partial area of a plurality of partial areas capable of being overlapped are set in the search area and the predictive error values disposed in the partial area or the partial areas are set as partial predictive error values;
wherein when the partial predictive error values in the partial area or at least one of the partial areas have been classified into the pattern 1, the block classifier (1405, 1705) classifies the encoding block into the pattern 1.

18. An image encoding apparatus (K5) as claimed in any of claims 11 to 16, wherein one partial search area or a plurality of partial search areas capable of being overlapped are set in the search area constituted by a group of blocks in which a motion vector corresponding to each of the predictive error values has an identical horizontal value or an identical vertical value and the predictive error values disposed in the partial area or the partial areas are set as partial predictive error values;
wherein when the partial predictive error values in the partial area or at least one of the partial areas have been classified into the pattern 1, the block classifier (1405, 1705) classifies the encoding block into the pattern 1.

19. An image encoding apparatus (K5) as claimed in any of claims 11 to 16, wherein the predictive error values or partial predictive error values for the encoding block are set as classified predictive error values;
wherein when statistical amount of the classified predictive error values is not more than and more than a pre-set value, the block classifier (1405, 1705) classifies the encoding block into the pattern 1 and the pattern 2, respectively;
wherein the statistical amount represents magnitude of the classified predictive error values including at least a maximum value or an average value of the classified predictive error values or represents variations of the classified predictive error values including at least a sum of absolute values of differences between a variance value of the classified predictive error values or the average value and each of the predictive error values or a difference between a maximum value and a minimum value of the classified predictive error values.
